(19) Europäisches Patentamt
European Patent Office
Office européen des brevets

(11) **EP 4 276 499 A1**

(12) **EUROPEAN PATENT APPLICATION**
published in accordance with Art. 153(4) EPC

(43) Date of publication:
**15.11.2023 Bulletin 2023/46**

(21) Application number: **22745875.9**

(22) Date of filing: **25.01.2022**

(51) International Patent Classification (IPC):
***G02B 1/111*** *(2015.01)* ***B32B 3/26*** *(2006.01)*
***B32B 27/30*** *(2006.01)* ***C09J 4/02*** *(2006.01)*
***C09J 7/26*** *(2018.01)* ***C09J 7/38*** *(2018.01)*
***C09J 133/06*** *(2006.01)* ***C09J 133/14*** *(2006.01)*
***C09J 175/04*** *(2006.01)*

(52) Cooperative Patent Classification (CPC):
**B32B 3/26; B32B 27/30; C09J 4/00; C09J 7/26; C09J 7/38; C09J 133/06; C09J 133/14; C09J 175/04; G02B 1/111**

(86) International application number:
**PCT/JP2022/002704**

(87) International publication number:
**WO 2022/163655 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.01.2021 JP 2021011080**

(71) Applicant: **NITTO DENKO CORPORATION**
**Ibaraki-shi**
**Osaka 567-8680 (JP)**

(72) Inventors:
- **HATTORI Daisuke**
  **Ibaraki-shi, Osaka 567-8680 (JP)**
- **MORISHIMA Ryota**
  **Ibaraki-shi, Osaka 567-8680 (JP)**
- **KISHI Atsushi**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) AIR GAP LAYER, MULTILAYER BODY, METHOD FOR PRODUCING AIR GAP LAYER, OPTICAL MEMBER AND OPTICAL DEVICE

(57) The present invention provides a void-containing layer in which a pressure-sensitive adhesive or an adhesive is less liable to penetrate into voids. A void-containing layer of the present invention, includes: particles chemically bonding to each other, wherein the void-containing layer has a void fraction of 35 vol% or more, the particle is an inorganic-organic composite particle in which an organic group is bonded to an inorganic compound, the organic group includes a $R^1$ group which is a linear or branched alkyl group and a $R^2$ group which is a group containing a carbon-carbon unsaturated bond, and a molar ratio of the $R^2$ group relative to a sum of the $R^1$ group and the $R^2$ group is from 1 to 30 mol%.

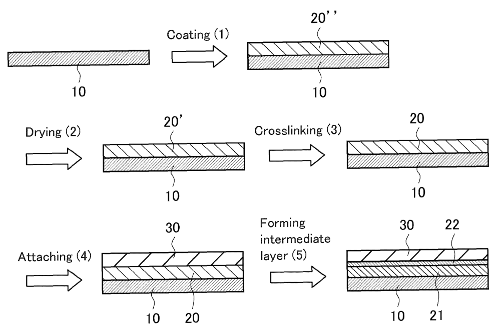


FIG. 1

EP 4 276 499 A1

Processed by Luminess, 75001 PARIS (FR)

## Description

The present invention relates to a void-containing layer, a laminate, a method for producing a void-containing layer, an optical member, and an optical apparatus.

BACKGROUND ART

In an optical device, for example, an air layer having a low refractive index is used as a total reflection layer. Specifically, for example, optical film members (e.g., a light guide plate and a reflector) in a liquid crystal device are laminated with an air layer interposed therebetween. However, when the respective members are separated from each other by an air layer, particularly in a case where the members are large in size, problems such as distortion of the members may arise. In addition, due to trends toward thinner devices, it is desired to integrate the respective members. For this reason, the respective members are integrated by a pressure-sensitive adhesive/adhesive without an air layer interposed therebetween (Patent Literature 1). However, if there is no air layer serving as a total reflection layer, optical characteristics may become poor, which causes light leakage.

Therefore, it has been proposed to use a low refractive index layer instead of an air layer. For example, Patent Literature 2 describes a structure in which a light guide plate and a reflector are laminated with a layer having a lower refractive index than that of the light guide plate interposed therebetween. As the low refractive index layer, for example, a void-containing layer having voids is used in order to make the refractive index low as close as possible to air.

Furthermore, in order to introduce a void-containing layer into a device, an integrated configuration with a pressure-sensitive adhesive/adhesive layer has also been proposed (Patent Literature 3).

Citation List

Patent Literature

Patent Literature 1: JP 2012-156082 A
Patent Literature 2: JPH10(1998)-062626 A
Patent Literature 3: JP 2014-046518 A

SUMMARY OF INVENTION

Technical Problem

For example, the void-containing layer is laminated on another layer with a pressure-sensitive adhesive/adhesive layer interposed therebetween to use. However, when laminating the void-containing layer and the pressure-sensitive adhesive/adhesive layer, the pressure-sensitive adhesive or adhesive constituting the pressure-sensitive adhesive/adhesive layer may penetrate into the voids of the void-containing layer to fill the voids, which lowers the void fraction of the void-containing layer and increases the refractive index. The higher the void fraction of the void-containing layer, the more likely the pressure-sensitive adhesive or adhesive will penetrate. In a high-temperature environment, the pressure-sensitive adhesive or adhesive is prone to penetrate into the voids due to the molecular motion (decrease in elastic modulus) of the pressure-sensitive adhesive or adhesive. In a high humidity environment, the pressure-sensitive adhesive or adhesive is prone to penetrate into the voids due to water absorption of the pressure-sensitive adhesive or adhesive.

In order to suppress or prevent the penetration of the pressure-sensitive adhesive or adhesive into the voids, the pressure-sensitive adhesive or the adhesive having an elastic modulus as high as possible (hard) may be used. However, if the elastic modulus of the pressure-sensitive adhesive or adhesive is high (hard), the pressure-sensitive adhesive force or the adhesive force may be lowered. Conversely, if the elastic modulus of the pressure-sensitive adhesive or adhesive is low (soft), although a high pressure-sensitive adhesive force or an adhesive force is readily obtained, the pressure-sensitive adhesive or adhesive may be prone to penetrate into the voids.

In order to suppress or prevent the penetration of the pressure-sensitive adhesive or the adhesive into the voids, for example, it is conceivable to form a layer (penetration suppressing layer) that can suppress the penetration of the pressure-sensitive adhesive or the adhesive on the void-containing layer by using a substance other than the pressure-sensitive adhesive or the adhesive. In that case, however, forming the penetration suppressing layer is required separately from forming the void-containing layer, which increases the number of manufacturing processes.

For these reasons, required is a void-containing layer in which a pressure-sensitive adhesive or an adhesive

is less liable to penetrate into voids.

Accordingly, it is an object of the present invention to provide a void-containing layer in which a pressure-sensitive adhesive or an adhesive is less liable to penetrate into voids, a laminate including the void-containing layer, a method for producing the void-containing layer, and an optical member and an optical apparatus including the void-containing layer.

Solution to Problem

In order to achieve the above object, the present invention provides a void-containing layer, including: particles chemically bonding to each other, wherein the void-containing layer has a void fraction of 35 vol% or more, the particle is an inorganic-organic composite particle in which an organic group is bonded to an inorganic compound, the organic group includes a $R^1$ group which is a linear or branched alkyl group and a $R^2$ group which is a group containing a carbon-carbon unsaturated bond, and a molar ratio of the $R^2$ group relative to a sum of the $R^1$ group and the $R^2$ group is from 1 to 30 mol%.

The present invention also provides a laminate including: the void-containing layer according to the present invention; and a pressure-sensitive adhesive/adhesive layer directly laminated on one or both sides of the void-containing layer.

The present invention also provides a method for producing the void-containing layer according to the present invention, including: coating a dispersion liquid including the particles; and drying the coated dispersion liquid.

The present invention also provides an optical member including: the laminate according to the present invention.

The present invention also provides an optical apparatus including: the optical member according to the present invention.

Advantageous Effects of Invention

The present invention can provide a void-containing layer in which a pressure-sensitive adhesive or an adhesive is less liable to penetrate into voids, a laminate including the void-containing layer, a method for producing the void-containing layer, and an optical member and an optical apparatus including the void-containing layer.

BRIEF DESCRIPTION OF DRAWINGS

[FIG. 1] FIG. 1 is a cross-sectional view schematically illustrating an example of a method for forming a laminate of the present invention in which a void-containing layer 21, an intermediate layer 22, and a pressure-sensitive adhesive/adhesive layer 30 are laminated on a resin base 10.

[FIG. 2] FIG. 2 is a schematic view showing an example of some processes in a method for producing a laminated film in the form of a roll ("laminated film roll") and an apparatus used in the method.

[FIG. 3] FIG. 3 is a schematic view showing another example of some processes in a method for producing a laminated film roll and an apparatus used for the method.

DESCRIPTION OF EMBODIMENTS

The present invention will be described more specifically below with reference to illustrative examples. It is to be noted, however, that the present invention is by no means limited by the following descriptions.

In the void-containing layer, for example, the $R^1$ group may be a linear or branched alkyl group having 1 to 6 carbon atoms.

In the $R^2$ group in the void-containing layer, one or more carbon-carbon unsaturated bonds may be present per $R^2$ group, for example. The carbon-carbon unsaturated bond may be, for example, a carbon-carbon double bond or a carbon-carbon triple bond. When two or more carbon-carbon unsaturated bonds are present, the carbon-carbon unsaturated bond may be, for example, one or both of a carbon-carbon double bond and a carbon-carbon triple bond.

In the void-containing layer, for example, the $R^2$ group may be a group represented by the following chemical formula ($R^2$):

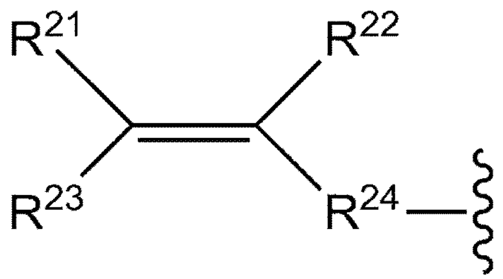

$(R^2)$

wherein the chemical formulae ($R^2$),

> $R^{21}$, $R^{22}$ and $R^{23}$ are each a hydrogen atom or a linear or branched alkyl group, and may be the same or different from one another, and
>
> $R^{24}$ is a linear or branched alkylene group, an oxycarbonyl group, an ether group, or a linear or branched alkylene oxycarbonyl group, or is not present. Note that the "oxycarbonyl group" refers to "-COO-" which is an atomic group in which a hydrogen atom of a carboxy group "-COOH" is replaced with a bond (single bond). For example, when $R^{21}$ is a hydrogen atom, $R^{22}$ is a methyl group, $R^{23}$ is a hydrogen atom, and $R^{24}$ is an oxycarbonyl group, $R^2$ is "$CH_2=C(CH_3)-COO-$". In addition, the "linear or branched alkylene oxycarbonyl group" refers to a "-COO-L-" (L is a linear or branched alkylene group) which is an atomic group in which a hydrogen atom of the carboxy group "-COOH" is replaced with a linear or branched alkylene group. For example, when $R^{21}$ is a hydrogen atom, $R^{22}$ is a methyl group, $R^{23}$ is a hydrogen atom, and $R^{24}$ is a trimethylene oxycarbonyl group (a kind of linear or branched alkylene oxycarbonyl group), $R^2$ is "$CH_2=C(CH_3)-COO-(CH_2)_3-$".

The void-containing layer of the present invention may be, for example a void-containing layer, wherein in the chemical formulae ($R^2$), $R^{21}$, $R^{22}$ and $R^{23}$ are each a hydrogen atom or a linear or branched alkyl group having 1 to 6 carbon atoms, and may be the same or different from one another, and $R^{24}$ is a linear or branched alkylene group having 1 to 6 carbon atoms, an oxycarbonyl group, an ether group, or a linear or branched alkylene oxycarbonyl group having 1 to 7 carbon atoms, or is not present.

In the void-containing layer of the present invention, for example, the $R^2$ group may be $CH_2=CH-$, $CH_2=CH-(CH_2)_{1-6}-$, $CH_2=C(CH_3)-COO-$, $CH_2=CH-O-$, $CH_2=C(CH_3)-COO-(CH_2)_{1-6}-$, or $CH_2=C(CH_3)-CH_2-$. Note that, "$-(CH_2)_{1-6}-$" represents a linear alkylene group having any of 1 to 6 methylene groups, that is, a methylene group, an ethylene group (dimethylene group), a trimethylene group, a tetramethylene group, a pentamethylene group, or a hexamethylene group.

In the void-containing layer of the present invention, for example, the inorganic compound in the particle contains at least one skeletal atom selected from the group consisting of Si, Mg, Al, Ti, Zn and Zr.

The void-containing layer may be, for example, a silicone-porous material. Note that, the "silicone porous material" refers to a polymer porous material containing siloxane bonds, and includes, for example, a porous material containing silsesquioxane as a structural unit.

The void-containing layer of the present invention may have a refractive index of 1.25 or less, for example.

The laminate of the present invention may include, for example, an intermediate layer between the void-containing layer and the pressure-sensitive adhesive/adhesive layer, wherein the intermediate layer is a layer formed by uniting the void-containing layer and the pressure-sensitive adhesive/adhesive layer.

In the laminate of the present invention, for example, the pressure-sensitive adhesive/adhesive layer is formed from a pressure-sensitive adhesive/adhesive coating solution containing a (meth)acrylic polymer, and a weight average molecular weight of the (meth)acrylic polymer obtained by polymerizing 3 to 10 wt% of a heterocycle-containing acrylic monomer, 0.5 to 5 wt% of (meth)acrylic acid, 0.05 to 2 wt% of hydroxyalkyl (meth)acrylate, and 83 to 96.45 wt% of alkyl (meth)acrylate, as monomer components, is 1.5 million to 2.8 million.

In the laminate of the present invention, for example, the (meth)acrylic polymer may include a (meth)acrylic polymer crosslinked with a crosslinking agent.

In the laminate of the present invention, for example, the pressure-sensitive adhesive/adhesive layer may be formed by a method including: preparing a pressure-sensitive adhesive/adhesive coating solution including a (meth)acrylic polymer, a monomer having one or two reactive double bonds per molecule, an isocyanate-based crosslinking agent,

and an organic peroxide; coating the pressure-sensitive adhesive/adhesive coating solution onto a base; and heat-drying the base coated with the pressure-sensitive adhesive/adhesive coating solution.

In the laminate of the present invention, for example, the monomer having one or two reactive double bonds is heterocycle-containing acrylate.

In the laminate of the present invention, for example, the pressure-sensitive adhesive/adhesive layer may have a storage elastic modulus of $1.0 \times 10^5$ or more at 23 °C.

The laminate of the present invention may have, for example, a refractive index of 1.25 or less after a heat/humidification durability test of maintaining a temperature at 60 °C and a relative humidity at 90% for 1000 hours.

By using the void-containing layer of the present invention, as described above, the laminate of the present invention can suppress obvious penetration of the pressure-sensitive adhesive/adhesive layer into the void-containing layer even under a particularly long-term heat/humidification durability test, for example.

In the laminate of the present invention, the reason (mechanism) for achieving both of the pressure-sensitive adhesive force or the adhesive force and the resistance to penetration of the pressure-sensitive adhesive or the adhesive into the voids is conceivable as follows, for example.

First, when the particles in the void-containing layer contain $R^2$ groups (for example, vinyl groups) which are groups containing carbon-carbon unsaturated bonds, the $R^2$ groups are sterically hindered and electrostatically repulsed. Due to the steric hindrance and the electrostatic repulsion between the $R^2$ groups, when the particles are gelled by incorporating synthetic solvents of the void-containing layer (when skeleton is formed), the particles form a gel structure with a wider intermolecular distance. Therefore, the diameter of the void of the void-containing layer after removing the synthetic solvents from the skeleton of the void-containing layer increases. Furthermore, the electrostatic repulsion also acts when the particles are deposited to form a void-containing layer, which increases the volume of air contained in the void-containing layer, resulting in a decrease in the initial refractive index. Also, the increase in the refractive index of the void-containing layer due to the absorption of the pressure-sensitive adhesive/adhesive layer under heat/humidification conditions and the penetration of the pressure-sensitive adhesive/adhesive layer into the voids due to the apparent decrease in the elastic modulus at high temperatures is caused by the penetration of the sol components from the pressure-sensitive adhesive/adhesive layer into the voids of the void-containing layer. However, the amount of the penetration component contained in the pressure-sensitive adhesive/adhesive layer is a constant amount when the thickness of the pressure-sensitive adhesive/adhesive layer is fixed. Therefore, if the void fraction of the void-containing layer is increased, the proportion of the voids filled with the pressure-sensitive adhesive in the entire void-containing layer after the heat/humidification durability test inevitably decreases. As a result, an increase in the refractive index after the heat/humidification durability test is suppressed. It is to be noted, however, that these mechanisms merely are examples and do not limit the present invention by any means.

In order to make it easier to obtain the advantageous effect of the present invention that the pressure-sensitive adhesive or the adhesive is less liable to penetrate into the voids of the void-containing layer, the content of the $R^2$ group is preferably not too large and not too small. The reason why the content of the $R^2$ group is preferably not too large is conceivable as follows, for example. First, when the $R^2$ group, which is a group containing a carbon-carbon unsaturated bond, is present, the diameter of the void of the void-containing layer tends to increase due to the steric hindrance and electrostatic repulsion. Therefore, in order to prevent the void diameter per void from becoming too large due to the steric hindrance and electrostatic repulsion between the $R^2$ groups becoming too large and the intermolecular distance becoming too wide, it is preferable that the content of the $R^2$ group be not too large. For the voids formed during deposition of the particles, for the same reason, it is preferable that the content of the $R^2$ group be not too large in order to prevent the void diameter per void from becoming too large. If the void diameter of the void-containing layer is too large, a target Mw (weight average molecular weight) range having a molecular size appropriate for the void diameter in the pressure-sensitive adhesive/adhesive layer will expand, resulting in increased sol components that can be penetrated into the void. As a result, there is a possibility that the voids of the void-containing layer are prone to be filled and the refractive index increases, and therefore, in order to prevent this, it is preferable that the content of the $R^2$ group be not too large. However, these descriptions are also examples, and do not limit the present invention in any way.

The void of the void-containing layer of the present invention may include nanoparticles, surfaces of which being modified with a compound having a surface orientation.

In the void-containing layer of the present invention, for example, the compound having the surface orientation may be an alkoxysilane derivative, and the alkoxysilane derivative may contain a fluoroalkyl group having 5 to 17 or 5 to 10 fluorine atoms. The fluoroalkyl group may be an alkyl group in which only a part of hydrogen is substituted with fluorine, or may be an alkyl group (perfluoroalkyl group) in which all hydrogen is substituted with fluorine.

The void-containing layer of the present invention may contain, for example, 10 to 50 mass% of the nanoparticles relative to a skeleton component of the void-containing layer.

In the method for producing a void-containing layer of the present invention, for example, a layer composed of the nanoparticles may be formed inside the void-containing layer while forming the void-containing layer.

When the void-containing layer of the present invention includes nanoparticles, surfaces of which being modified

with a compound having a surface orientation, the pressure-sensitive adhesive/adhesive layer is less liable to penetrate into the void-containing layer. The reason (mechanism) is conceivable as follows, for example. First, the surface orientation (migration to an air interface) of a compound having a surface orientation (e.g., a compound having perfluoroalkyl) is utilized to impart the surface orientation to nanoparticles themselves, the surfaces of which have been modified with the compound. The compound having the surface orientation alone can perform the surface modification of the void-containing layer but is not enough to suppress the macroscopic penetration of the pressure-sensitive adhesive. Therefore, the voids on the outermost surface of the void-containing layer are filled with the nanoparticles and the penetration of the pressure-sensitive adhesive or the adhesive is physically suppressed. However, since nanoparticles, surfaces of which being not modified, have no surface orientation, they are just present in the void-containing layer and are not oriented on the surface of the void-containing layer, which does not bring about a penetration suppressing effect. By modifying the nanoparticles with a compound having a surface orientation, the nanoparticles have surface orientation to the void-containing layer. Thereby, as described above, the voids in the outermost surface of the void-containing layer are filled with the nanoparticles and the penetration of the pressure-sensitive adhesive or the adhesive is physically suppressed. That is, the voids on the outermost surface of the void-containing layer are filled with the nanoparticles modified with a compound having a surface orientation, thereby forming a layer for suppressing penetration of the pressure-sensitive adhesive or the adhesive on the outermost surface (surface layer). Thus, as described above, separately forming a penetration suppressing layer is unnecessary, and an increase in the number of manufacturing processes due to forming the penetration suppressing layer can be avoided. It is to be noted, however, that these mechanisms merely are examples and do not limit the present invention by any means. In order to produce the void-containing layer of the present invention, for example, as described below, nanoparticles modified with a compound having a surface-orientation may be added to a coating solution for forming a void-containing layer.

[1. Void-containing layer, laminate, optical member, and optical apparatus]

As described above, the void-containing layer of the present invention is a void-containing layer formed by chemically bonding particles to each other, wherein the void-containing layer has a void fraction of 35 vol% or more, the particle is an inorganic-organic composite particle in which an organic group is bonded to an inorganic compound, the organic group includes a $R^1$ group which is a linear or branched alkyl group and a $R^2$ group which is a group containing a carbon-carbon unsaturated bond, and a molar ratio of the $R^2$ group relative to the sum of the $R^1$ group and the $R^2$ group is from 1 to 30 mol%. As described above, the laminate of the present invention is characterized in that it includes the void-containing layer of the present invention and a pressure-sensitive adhesive/adhesive layer directly laminated on one or both sides of the void-containing layer. Note that, in the present invention, for example, "the pressure-sensitive adhesive/adhesive layer is 'directly laminated on' the void-containing layer" may mean either the pressure-sensitive adhesive/adhesive layer is in direct contact with the void-containing layer or the pressure-sensitive adhesive/adhesive layer is laminated on the void-containing layer with an intermediate layer interposed therebetween.

In the laminate of the presnet invention, after the heat/humidification durability test of maintaining a temperature at 60 °C and a relative humidity at 90% for 1000 hours, the void retention rate of the void-containing layer may be, for example, 70 vol% or more, 80 vol% or more, or 83 vol% or more relative to the voids before the heat/humidification durability test, and the upper limit of the void retention rate is not particularly limited, and is ideally 100 vol%, and may be 99 vol% or less, 98 vol% or less, or 95 vol% or less.

When the laminate of the present invention includes an intermediate layer, for example, after the heat/humidification durability test of maintaining a temperature at 60 °C and a relative humidity at 90% for 1000 hours, the increasing rate of the thickness of the intermediate layer may be 500% or less relative to the thickness of the intermediate layer before the heat/humidification durability test with the thickness of the intermediate layer before the heat/humidification durability test being considered as 100%. The increasing rate of the thickness of the intermediate layer after the heat/humidification durability test may be, for example, 500% or less, 400% or less, or 300% or less, and for example, 110% or more, 120% or more, 130% or more, or 150% or more, relative to the thickness of the intermediate layer before the heat/humidification durability test with the thickness of the intermediate layer before the heat/humidification durability test being considered as 100%.

In addition, in the laminate of the present invention, the void retention rate of the void-containing layer after the heat/humidification durability test may be, for example, 80% or more, 85% or more, or 88% or more, and may be 99% or less, 98% or less, or 97% or less of the void retention rate in the case where only the void-containing layer has been subjected to the heat/humidification durability test.

In the present invention, the light transmittance of the void-containing layer of the present invention or the laminate of the present invention may be 80% or more. For example, the haze of the void-containing layer of the present invention or the laminate of the present invention may be 3% or less. The light transmittance may be, for example, 82% or more, 84% or more, 86% or more, or 88% or more, and the upper limit is not particularly limited, and is ideally 100%, and may be, for example, 95% or less, 92% or less, 91% or less, or 90% or less. The haze of the void-containing layer

of the present invention or the laminate of the present invention can be measured, for example, by the haze measurement method described below. The light transmittance is a transmittance of light at a wavelength of 550 nm, and can be measured by, for example, the following measurement method.

(Measurement method of light transmittance)

A spectrophotometer U-4100 (product name, manufactured by Hitachi, Ltd.) is used, and the laminate is used as a sample to be measured. The total light transmittance (light transmittance) of the sample is measured with the total light transmittance of air being considered as 100%. The value of the total light transmittance (light transmittance) is a value measured at a wavelength of 550 nm.

In the laminate of the present invention, for example, the pressure-sensitive adhesive/adhesive layer may have a pressure-sensitive adhesive force or an adhesive force of 0.7N/25 mm or more, 0.8N/25 mm or more, 1.0N/25 mm or more, or 1.5N/25 mm or more, and 50N/25 mm or less, 30N/25 mm or less, 10N/25 mm or less, 5N/25 mm or less, or 3N/25 mm or less. From the viewpoint of risks of peeling off during handling when the laminate is attached to another layer, it is preferable that the pressure-sensitive adhesive force or the adhesive force of the pressure-sensitive adhesive/adhesive layer be not too low. On the other hand, from the viewpoint of rework at the time of reattachment, it is preferable that the pressure-sensitive adhesive force or the adhesive force of the pressure-sensitive adhesive/adhesive layer be not too high. The pressure-sensitive adhesive force or the adhesive force of the pressure-sensitive adhesive/adhesive layer can be measured, for example, as follows.

(Measurement method of pressure-sensitive adhesive force or adhesive force)

From the laminated film of the present invention (film in which the laminate of the present invention is formed on a resin film base), a rectangular strip-shaped piece with a size of 50 mm × 140 mm is obtained as a sample, and the sample is fixed to a stainless plate with a double-sided tape. An acrylic pressure-sensitive adhesive layer (thickness: 20 μm) is attached to a PET film (T100: manufactured by Mitsubishi Plastics, Inc.), and the thus-obtained pressure-sensitive adhesive tape is cut into a piece with a size of 25 mm × 100 mm. The thus-obtained cut piece is attached to the laminated film of the present invention on the side opposite to the resin film to form a laminate of the PET film and the laminated film. Then, the sample is chucked in an autograft tensile testing machine (AG-Xplus, manufactured by Shimadzu Corporation) with a distance between chucks being 100 mm, and the tensile test is performed at a tensile speed of 0.3 m/min. The mean value of the peel test data for 50 mm is set as the peel adhesion force, i.e., pressure-sensitive adhesive force. The adhesive force can also be measured by the same measurement method. In the present invention, there is no clear distinction between the "pressure-sensitive adhesive force" and the "adhesive force".

The laminate of the present invention may be formed on a base such as, for example, a film. The film may be, for example, a resin film. Regarding the "film" and the "sheet", generally, the one having a relatively small thickness is called a "film" and the one having a relatively large thickness is called a "sheet" in some cases, however, in the present invention, there is no particular distinction between the "film" and the "sheet".

The base is not limited to particular bases, and for example, a base made of a thermoplastic resin, a base made of glass, an inorganic base plate typified by silicon, a plastic formed of a thermosetting resin, an element such as a semiconductor, or a carbon fiber-based material typified by carbon nanotube can be favorably used. The base, however, is by no means limited thereto. Examples of the form of the base include a film and a plate. Examples of the thermoplastic resin include polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP).

The optical member of the present invention is not particularly limited, and may be, for example, an optical film including the laminate of the present invention.

The optical apparatus (optical device) of the present invention is not particularly limited, and may be, for example, an image display device, an illumination device, or the like. Examples of the image display device include a liquid crystal display, an organic electro luminescence (EL) display, and a micro light emitting diode (LED) display. The illumination device may be, for example, an organic EL illumination, or the like.

[2. Void-containing layer]

The void-containing layer in the laminate of the present invention (hereinafter also referred to as the "void-containing layer of the present invention") will be described below with reference to examples. It is to be noted, however, that the void-containing layer of the present invention is not limited thereto.

The void-containing layer of the present invention may have, for example, a void fraction of 35 vol% or more and a peak pore diameter of 50 nm or less. However, this merely is an example, and the void-containing layer of the present invention is not limited thereto.

The void fraction may be, for example, 35 vol% or more, 38 vol% or more, or 40 vol% or more, and 90 vol% or less, 80 vol% or less, or 75 vol% or less. The void-containing layer of the present invention may be, for example, a highly void-containing layer having a void fraction of 60 vol% or more.

The void fraction can be measured, for example, by the following measurement method.

(Measurement method of void fraction)

If the layer whose void fraction is to be measured is a single layer containing voids, the ratio (volume ratio) between the component of the layer and the air can be calculated by a standard method (for example, weight and volume are measured to calculate the density), whereby the void fraction (vol%) can be calculated. Further, since the refractive index and the void fraction have a correlation, the void fraction can be calculated from the value of the refractive index as a layer, for example. Specifically, the void fraction is calculated according to the Lorentz-Lorenz's formula from the value of the refractive index measured by an ellipsometer.

The void-containing layer of the present invention can be produced, for example, by chemical bonding of gel pulverized products (microporous particles) as will be described below. In this case, the voids of the void-containing layer can be divided into three types (1) to (3) below for convenience.

(1) Voids contained in raw material gel itself (inside the particles)
(2) Voids contained in gel pulverized product unit
(3) Voids between gel pulverized products created by deposition of gel pulverized products [0061] The voids (2) are voids formed during pulverization, which are different from the voids (1) that can be formed in each block when each particle group generated by pulverizing a gel is regarded as one mass (block) regardless of the size or the like of the gel pulverized product (microporous particle). The voids (3) are voids created because of irregularity in the sizes or the like of the gel pulverized products (microporous particles) in pulverization (e.g., media-less pulverization). The void-containing layer of the present invention contains the voids (1) to (3), whereby an appropriate void fraction and peak pore diameter can be achieved, for example.

The peak pore diameter may be, for example, 5 nm or more, 10 nm or more, or 20 nm or more, and 50 nm or less, 40 nm or less, or 30 nm or less. In the void-containing layer, if the peak pore diameter is too large in a state where the void fraction is high, light is scattered, which makes the void-containing layer opaque. Further, in the present invention, the lower limit value of the peak pore diameter of the void-containing layer is not particularly limited, but it is preferable that the peak pore diameter be not too small because it is difficult to increase the void fraction if the peak pore diameter is too small. In the present invention, the peak pore diameter can be measured, for example, by the following method.

(Measurement method of peak pore diameter)

The peak pore diameter is calculated from the results of the BJH plot and the BET plot by nitrogen adsorption and the isothermal adsorption line using a pore distribution/specific surface area analyzer (product name: BELLSORP MINI, MicrotracBEL Corp.).

As described above, the void-containing layer is a void-containing layer formed by chemically bonding particles to each other. As described above, the particle is an inorganic-organic composite particle in which an organic group is bonded to an inorganic compound, the organic group includes a $R^1$ group which is a linear or branched alkyl group and a $R^2$ group which is a group containing a carbon-carbon unsaturated bond, and the molar ratio of the $R^2$ group relative to the sum of the $R^1$ group and the $R^2$ group is from 1 to 30 mol%. The method for causing the particles to contain the $R^1$ group and the $R^2$ group will be described in detail below.

The void-containing layer of the present invention may include nanoparticles, surfaces of which being modified with a compound having a surface orientation, as described above. The nanoparticles will be described in detail below. The void-containing layer of the present invention may include, for example, 10 to 50 mass%, 15 to 40 mass%, or 20 to 30 mass% of the nanoparticles relative to a skeleton component of the void-containing layer. In the void-containing layer of the present invention, the "skeleton component" means a component having the largest mass among components forming the void-containing layer of the present invention other than air. When the void-containing layer of the present invention is a silicone porous material, the "skeleton component" in the void-containing layer of the present invention is a condensation product of monoalkyl (trimethoxy)silane, for example.

The thickness of the void-containing layer of the present invention is not particularly limited, and may be, for example, 100 nm or more, 200 nm or more, or 300 nm or more, and 10000 nm or less, 5000 nm or less, or 2000 nm or less.

The void-containing layer of the present invention uses pulverized products of the porous gel material, for example. Thus, the three-dimensional structure of the porous gel material is destroyed, whereby a new three-dimensional structure different from that of the porous gel material is formed. As will be described below, the void-containing layer

of the present invention becomes a layer having a new pore structure (new void-containing structure) that cannot be obtained in a layer formed using the porous gel material. That is, a nano-scale void-containing layer having a high void fraction can be formed. Moreover, for example, when the void-containing layer of the present invention is a silicone porous material, the pulverized products in the void-containing layer are chemically bonded to each other while adjusting the number of functional groups having siloxane bonds of the silicon compound gel, for example. Furthermore, a new three-dimensional structure is formed as a void-containing layer precursor, and pulverized products are thereafter bonded chemically (e.g., crosslinked) to each other in bonding. Thus, when the void-containing layer of the present invention is a functional porous material, for example, the void-containing layer has a structure with void spaces while maintaining sufficient strength and sufficient flexibility. Therefore, according to the present invention, the void-containing layer can be easily and simply applied to various objects.

For example, the void-containing layer of the present invention includes pulverized products of a porous gel material as will be described below, and the pulverized products are chemically bonded to each other. In the void-containing layer of the present invention, the form of the chemical bonding (chemical bonds) between the pulverized products is not limited to particular forms. Specifically, the chemical bonds may be crosslinking bonds, for example. The method for chemically bonding the pulverized products to each other is as will be described in detail in, for example, the method for producing the void-containing layer to be described below.

The crosslinking bonds are siloxane bonds, for example. Examples of the siloxane bonds include T2, T3, and T4 bonds shown below. When the silicone porous material of the present invention has siloxane bonds, the silicone porous material may have any one of the T2, T3, and T4 bonds, any two of them, or all three of them, for example. As the proportions of T2 and T3 among the siloxane bonds become higher, the silicone porous material becomes more flexible, so that it is expected that the silicone porous material exhibits characteristics intrinsic to the gel. However, the film strength of the silicone porous material is deteriorated. On the other hand, as the proportion of T4 among the siloxane bonds becomes higher, high film strength is more likely to be achieved, whereas the sizes of the void spaces become smaller, resulting in deteriorated flexibility. Thus, it is preferable to adjust the proportions of T2, T3, and T4 depending on the intended use of the silicone porous material, for example.

**T2**

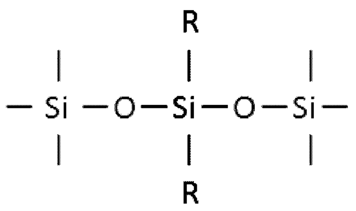

**T3**

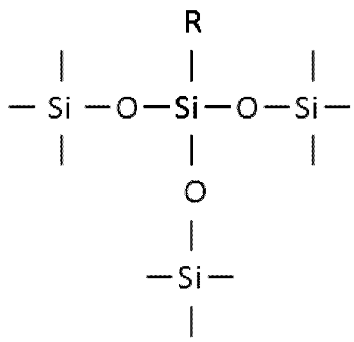

**T4**

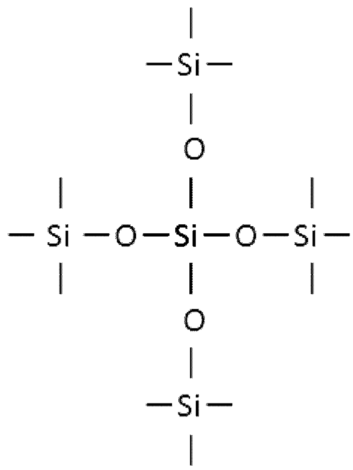

In the case where the void-containing layer of the present invention has the siloxane bonds, the ratio of T2, T3, and T4 expressed relatively assuming that the ratio of T2 is " 1" is as follows, for example: T2 : T3 : T4 = 1 :[1 to 100] :[0 to 50], 1 :[1 to 80] :[1 to 40], or 1 :[5 to 60] :[1 to 30].

It is preferable that silicon atoms contained in the void-containing layer of the present invention be bonded to each other through siloxane bonds, for example. As a specific example, the proportion of unbonded silicon atoms (i.e., residual silanol) among all the silicon atoms contained in the silicone porous material is less than 50%, 30% or less, or 15% or less, for example.

The void-containing layer of the present invention has a pore structure. In the present invention, the size of each void space in the pore structure indicates, out of the diameter of the long axis and the diameter of the short axis of the void space (pore), the diameter of the long axis. The void space size (pore) is from 5 nm to 50 nm, for example. The lower limit of the size is, for example, 5 nm or more, 10 nm or more, or 20 nm or more. The upper limit of the size is, for example, 50 nm or less, 40 nm or less, or 30 nm or less. The range of the size is, for example, from 5 nm to 50 nm or from 10 nm to 40 nm. A preferable void space size is determined depending on the use of the void-containing

structure. Thus, it is necessary to adjust the void space size to a desired size according to the intended use, for example. The void space size can be evaluated in the following manner, for example.

(SEM observation of cross section of void-containing layer)

In the present invention, the void-containing layer can be observed and analyzed using a scanning electron microscopy (SEM). Specifically, for example, the void-containing layer is subjected to FIB processing (acceleration voltage: 30 kV) while being cooled, and the cross-sectional electronic image of the obtained cross-sectional sample can be obtained by FIB-SEM (product name: Helios NanoLab 600, manufactured by FEI Company, acceleration voltage: 1 kV) at an observing magnification of 100,000×.

(Evaluation of void space size)

In the present invention, the void space size can be quantified according to the BET test. Specifically, 0.1 g of a sample (the void-containing layer of the present invention) is set in a capillary of a pore distribution/surface area measurement apparatus (product name: BELLSORP MIN, manufactured by MicrotracBEL Corp.), and dried under reduced pressure at room temperature for 24 hours to remove gas in the void-containing structure. Then, a BET plot, a BJH plot, and an adsorption isotherm are created by causing the sample to adsorb nitrogen gas, whereby the pore distribution is determined. On the basis of the thus-determined pore distribution, the void space size can be evaluated.

The void-containing layer of the present invention may have, for example, a pore structure (porous structure) as mentioned above, and the pore structure may be an open-cell structure in which pores are interconnected with each other, for example. The open-cell structure means that, for example, pores three-dimensionally communicate with each other in the void-containing layer. In other words, the open-cell structure means the state where void spaces inside the pore structure are interconnected with each other. When a porous material has an open-cell structure, this structure allows the bulk body to have a higher void fraction. However, in the case where closed-cell particles such as hollow silica particles are used, an open-cell structure cannot be formed. In contrast, in the void-containing layer of the present invention, an open-cell structure can be formed easily for the following reason. Sol particles (pulverized products of a porous gel material for forming a sol) each have a dendritic structure, so that the open-cell structure is formed as a result of sedimentation and deposition of the dendritic particles in a coating film (a coating film formed of a sol containing pulverized products of the porous gel material). Further, it is more preferable that the void-containing layer of the present invention form a monolith structure, which is an open-cell structure including two or more types of micropore distributions. The monolith structure refers to a layered structure including a structure in which nano-sized minute void spaces are present and an open-cell structure formed by aggregation of the nano-sized void spaces, for example. When the monolith structure is formed, for example, the film strength is imparted by the minute void spaces whereas a high void fraction is achieved by the presence of the void spaces forming a bulky open-cell structure. Thus, both film strength and a high void fraction can be attained. In order to form such a monolith structure, for example, first, in the porous gel material before being pulverized into the pulverized products, it is important to control the micropore distributions in a void-containing structure to be generated. Also, the monolith structure can be formed by, for example, controlling, at the time of pulverizing the porous gel material, the particle sizes of the pulverized products so that a desired particle size distribution can be obtained.

In the void-containing layer of the present invention, the haze value indicating the transparency is not particularly limited, and the lower limit thereof is, for example, 0.1% or more, 0.2% or more, or 0.3% or more, the upper limit thereof is, for example, 10% or less, 5% or less, or 3% or less, and the range thereof is, for example, from 0.1% to 10%, from 0.2% to 5%, or from 0.3% to 3%.

The haze value can be measured in the following manner, for example.

(Evaluation of haze value)

A void-containing layer (the void-containing layer of the present invention) is cut into a piece with a size of 50 mm × 50 mm, and the thus-obtained cut piece is set in a haze meter (HM-150, manufactured by Murakami Color Research Laboratory) to measure the haze value. The haze value is calculated by the following equation.

$$\text{Haze value (\%)} = [\text{diffuse transmittance (\%)}/\text{total light transmittance (\%)}] \times 100\ (\%)$$

The "refractive index" of a given medium generally refers to the ratio of transmission speed of the wavefront of light in vacuum to the phase velocity of the light in the medium. The refractive index of the void-containing layer of the present invention is not particularly limited, and the upper limit thereof is, for example, 1.3 or less, less than 1.3, 1.25

or less, 1.2 or less, or 1.15 or less, the lower limit thereof is, for example, 1.05 or more, 1.06 or more, or 1.07 or more, and the range thereof is, for example, 1.05 or more and 1.3 or less, 1.05 or more and less than 1.3, 1.05 or more and 1.25 or less, 1.06 or more and less than 1.2, or 1.07 or more and 1.15 or less.

In the present invention, the refractive index refers to the one measured at a wavelength of 550 nm, unless otherwise stated. The method for measuring the refractive index is not particularly limited. For example, the refractive index can be measured in the following manner.

(Evaluation of refractive index)

A void-containing layer (the void-containing layer of the present invention) is formed on an acrylic film, and the obtained laminate is then cut into a piece with a size of 50 mm × 50 mm. The thus-obtained cut piece is attached to a surface of a glass plate (thickness: 3 mm) with a pressure-sensitive adhesive layer. The central portion (diameter: about 20 mm) of the back surface of the glass plate is painted entirely with black ink, thereby preparing a sample that allows no reflection at the back surface of the glass plate. The sample is set in an ellipsometer (VASE, manufactured by J. A. Woollam Japan), and the refractive index is measured at a wavelength of 500 nm and at an incidence angle of 50° to 80°. The mean value of the thus-obtained measured values is set as the refractive index.

The thickness of the void-containing layer of the present invention is not particularly limited, and the lower limit thereof is, for example, 0.05 μm or more or 0.1 μm or more, and the upper limit thereof is, for example, 1000 μm or less or 100 μm or less, and the range thereof is, for example, from 0.05 to 1000 μm or 0.1 to 100 μm.

The form of the void-containing layer of the present invention is not particularly limited, and may be, for example, in the form of a film, a block, or the like.

The method for producing the void-containing layer of the present invention is not particularly limited, and can be produced by, for example, the method as will be described below.

[3. $R^1$ group and $R^2$ group]

As described above, the void-containing layer is a void-containing layer formed by chemically bonding particles to each other. As described above, the particle is an inorganic-organic composite particle in which an organic group is bonded to an inorganic compound, the organic group includes a $R^1$ group which is a linear or branched alkyl group and a $R^2$ group which is a group containing a carbon-carbon unsaturated bond, and the molar ratio of the $R^2$ group relative to the sum of the $R^1$ group and the $R^2$ group is from 1 to 30 mol%. The molar ratio of the $R^2$ group relative to the sum of the $R^1$ group and the $R^2$ group may be, for example, 30 mol% or less, 25 mol% or less, or 10 mol% or less, and may be, for example, 1 mol% or more, 1.5 mol% or more, 1.8 mol% or more, 2 mol% or more, or 2.5 mol% or more. The molar ratio can be obtained by comparing the intensity of the proton peak from the $R^1$ group and the intensity of the proton peak from the $R^2$ group using a solid-state NMR ($^1H$-NMR).

The $R^1$ group is not particularly limited, and examples thereof include a methyl group, an ethyl group, a n-propyl group, an isopropyl group, a n-butyl group, a sec-butyl group, and a tert-butyl group. The $R^2$ group is also not particularly limited, and examples thereof include those as described above.

As a method for causing the particles to contain the $R^1$ group and the $R^2$ group, for example, a compound containing the $R^1$ group and the $R^2$ group may be used as a part or the whole of a raw material in producing the particles. Further, for example, a compound containing the $R^1$ group and a compound containing the $R^2$ group may be used, as part or the whole of the raw material, in addition to or in place of the compound containing the $R^1$ group and the $R^2$ group. The compound containing the $R^1$ group and the $R^2$ group is not particularly limited, and may be, for example, a combination of methyltrimethoxysilane and vinyltrimethoxysilane. Methyltrimethoxysilane is a compound having a methyl group as the $R^1$ group and vinyltrimethoxysilane is a compound having a vinyl group as the $R^2$ group. Besides this combination, examples of the combination of the compounds having the $R^1$ group and the $R^2$ group include a combination of methyltrimethoxysilane and allyl trimethoxysilane, a combination of methyltrimethoxysilane and 3-(acryloxy)propyltrimethoxysilane, a combination of methyltriethoxysilane and allyltrimethoxysilane, a combination of methyltriethoxysilane and 3-(acryloxy)propyltrimethoxysilane, a combination of methyltriethoxysilane and vinyltrimethoxysilane, a combination of methyltrimethoxysilane and allyl triethoxysilane, a combination of methyltrimethoxysilane and 3-(acryloxy)propyltriethoxysilane, and a combination of methyltrimethoxysilane and vinyl triethoxysilane. The compound containing the $R^1$ group is not particularly limited, and examples thereof include methyltrimethoxysilane, methyltriethoxysilane, ethyltrimethoxysilane, ethyltriethoxysilane, n-propyltrimethoxysilane, n-propyltriethoxysilane, isopropyltrimethoxysilane, and isopropyltriethoxysilane. The compound containing the $R^2$ group is not particularly limited, and examples thereof include vinyltrimethoxysilane, vinyltriethoxysilane, allyltriethoxysilane, allyltriethoxysilane, 3-(acryloxy)propyltrimethoxysilane, 3-(acryloxy)propyltriethoxysilane, methylvinyldiethoxysilane, methylvinyldiethoxysilane, vinyltriisopropoxysilane, vinyltris(2-methoxyethoxy)silane, tris(trimethylsiloxy)vinylsilane, dimethylethoxyvinylsilane, trimethoxy(7-octene-1-yl)silane, 3-[dimethoxy(methyl)silyl]propylmethacrylate, 3-(methoxydimethylsilyl)propyl acrylate, 3-(trimethoxysilyl)propyl methacrylate, 3-(triethoxysilyl)propyl methacrylate, 3-[dimethoxy(methyl)silyl]propyl acrylate, [dimethoxy(methyl)silyl]methyl methacrylate, and (triethoxysilyl)methyl methacrylate. The content of the compound containing the $R^1$ group and the $R^2$ group, the compound containing the $R^1$ group, and the compound containing the $R^2$ group in the raw material is not particularly limited, and may be appropriately set so that the content of the $R^1$ group and the $R^2$ group in the particles is suitable, for example. The content of the compound containing the $R^2$ group in the raw material is not particularly limited, and may be, for example, 30 mass% or less, 20 mass% or less, or 10 mass% or less, and may be, for example, 1 mass% or more, 1.5 mass% or more, 1.8 mass% or more, or 2 mass% or more, relative to the total mass of the compound containing the $R^1$ group and the $R^2$ group. In addition, a compound other than the compound containing the $R^1$ group and the $R^2$ group may be included.

[4. Nanoparticles, surfaces of which being modified with a compound having a surface orientation]

The void-containing layer of the present invention may include a compound having a surface orientation, as described above.

The compound having the surface orientation may contain, for example, a fluoroalkyl group having 5 to 17 or 5 to 10 fluorine atoms. The fluoroalkyl group may be an alkyl group in which only a part of hydrogen is substituted with fluorine, or may be an alkyl group (perfluoroalkyl group) in which all hydrogen is substituted with fluorine. The fluoroalkyl group may be, for example, a fluoroalkyl group including a perfluoroalkyl group in a part of its structure. The alkyl group in the fluoroalkyl group is not particularly limited, and, may be a linear or branched alkyl group having 2 to 10 carbon atoms, for example.

As described above, for example, the compound having the surface orientation is an alkoxysilane derivative, and the alkoxysilane derivative may contain a fluoroalkyl group having 5 to 17 or 5 to 10 fluorine atoms. The fluoroalkyl group may be an alkyl group in which only a part of hydrogen is substituted with fluorine, or may be an alkyl group (perfluoroalkyl group) in which all hydrogen is substituted with fluorine. The fluoroalkyl group may be, for example, a fluoroalkyl group including a perfluoroalkyl group in a part of its structure. The alkyl group in the fluoroalkyl group is not particularly limited, and, may be a linear or branched alkyl group having 2 to 10 carbon atoms, for example, as described above.

The alkoxysilane derivative may be, for example, a monoalkoxysilane, a dialkoxysilane, a trialkoxysilane, or a tetraalkoxysilane derivative. More specifically, the alkoxysilane derivative may be a derivative in which one or more alkyl groups among the alkoxy groups per molecule of the alkoxysilane is substituted with the fluoroalkyl group. The alkyl group in the fluoroalkyl group is, for example, as described above. In addition, in the molecule of the alkoxysilane derivative, the alkoxy group in which the alkyl group is not substituted with the fluoroalkyl group is not particularly limited, and is, for example, a linear or branched alkyl group having 1 to 4 carbon atoms, and may be, for example, a methoxy group or the like. Specific examples of the alkoxysilane derivative include trimethoxy(1H,1H,2H,2H-nonafluorohexyl)silane, trimethoxy(1H,1H,2H,2H-heptadecafluorodecyl)silane, and triethoxy[5,5,6,6,7,7,7-heptafluoro-4,4-bis(trifluoromethyl)heptyl]silane. In addition, only one type of the alkoxysilane derivative may be used alone or two or more of the alkoxysilane derivatives may be used in combination.

As an example of the compound having the surface orientation, besides the alkoxysilane derivative, for example, a surfactant having a perfluoro group and further having a hydrophilic site such as a hydroxyl group or a sodium sulfonate group and a hydrophobic site in one structure at a terminal thereof can be given.

The nanoparticle is not particularly limited, and may be, for example, a silica particle, and more specifically, for example, a pulverized product of a silicon compound gel as described below, or the like. The particle diameter of the nanoparticle is not particularly limited, and, for example, the volume average particle diameter may be 1 nm or more, 2 nm or more, 3 nm or more, or 5 nm or more, and 1000 nm or less, 500 nm or less, 200 nm or less, or 50 nm or less. The volume average particle diameter can be measured using a particle size distribution analyzer based on dynamic light scattering, laser diffraction, or the like, or using an electron microscope such as a scanning electron microscope (SEM) or a transmission electron microscope (TEM), for example.

The method of modifying the nanoparticles with the compound having the surface orientation is not particularly limited, and, for example, a known method or the like can be appropriately used. More specifically, for example, the nanoparticles and the compound having the surface orientation may be heated and reacted in a liquid. The medium (dispersion medium) in the liquid is not particularly limited, and may be, for example, water and alcohol, and only one type of the medium may be used alone or two or more types of the media may be used in combination. Examples of the alcohol include IPA (isopropyl alcohol), IBA (isobutyl alcohol), ethanol, and methanol, and may include solvents other than the above-described alcohols such as MIBK (methyl isobutyl ketone) and MEK (methyl ethyl ketone). The reaction temperature and the reaction time of the reaction are not particularly limited, and can be appropriately set.

[5. Pressure-sensitive adhesive/adhesive coating solution]

In the laminate of the present invention, the pressure-sensitive adhesive/adhesive layer is not particularly limited, and can be formed using, for example, a pressure-sensitive adhesive/adhesive coating solution (hereinafter sometimes referred to as the "pressure-sensitive adhesive/adhesive coating solution of the present invention") containing a (meth)acrylic polymer, a monomer having one or two reactive double bonds per molecule, an isocyanate-based crosslinking agent, and an organic peroxide, as described above. The pressure-sensitive adhesive/adhesive coating solution of the present invention can be produced, for example, by a production method including mixing the (meth)acrylic polymer, a monomer having one or two reactive double bonds per molecule, the isocyanate-based crosslinking agent, and the organic peroxide. In the present invention, the "pressure-sensitive adhesive" and the "adhesive" are not always clearly distinguishable from each other as described below. Hereinafter, the "pressure-sensitive adhesive/adhesive" shall include both of the "pressure-sensitive adhesive" and the "adhesive", unless otherwise stated. As described above, the pressure-sensitive adhesive/adhesive coating solution of the present invention includes a (meth)acrylic polymer, a monomer having one or two reactive double bonds per molecule, an isocyanate-based crosslinking agent, and an organic peroxide. Besides this, the pressure-sensitive adhesive/adhesive coating solution of the present invention is not particularly limited, and is exemplified as follows, for example.

In the pressure-sensitive adhesive/adhesive coating solution, for example, the (meth)acrylic polymer includes, as a monomer component, 3 to 10 wt% of a heterocycle-containing acrylic monomer and a polymerizable functional group, and includes 0.5 to 5 wt% of (meth)acrylic acid, 0.05 to 2 wt% of hydroxyalkyl (meth)acrylate, and 83 to 96.45 wt% of alkyl (meth)acrylate, and this (meth)acrylic polymer is used as a base polymer.

As the heterocycle-containing acrylic monomer, for example, one having a polymerizable functional group and having a heterocyclic ring can be used without any particular limitation. Examples of the polymerizable functional group include a (meth)acryloyl group and a vinyl ether group. Of these, the (meth)acryloyl group is preferred. Examples of heterocycle include morpholine rings, piperidine rings, pyrrolidine rings, and piperazine rings. Examples of the heterocycle-containing acrylic monomer include N-acryloylmorpholine, N-acryloylpiperidine, N-methacryloylpiperidine, and N-acryloylpyrrolidine. Among these, N-acryloylmorpholine is preferable. The heterocycle-containing acrylic monomer can improve the durability of any of heat resistance and moisture resistance in the case of thinning the pressure-sensitive adhesive layer. In the following description, N-acryloylmorpholine is sometimes referred to as "ACMO".

Further, the heterocycle-containing acrylic monomer is preferable from the viewpoint of improving the pressure-sensitive adhesive force of the pressure-sensitive adhesive layer to the optical film. In particular, it is preferable from the viewpoint of improving the pressure-sensitive adhesive force to cyclic polyolefin such as a norbornene resin, and it is suitable when a cyclic polyolefin is used as the optical film.

The heterocycle-containing acrylic monomer is used, for example, in a proportion of 3 to 10 wt% relative to the total amount of monomer components forming the (meth)acrylic polymer. The proportion of the heterocycle-containing acrylic monomer may be, for example, 4 to 9.5 wt% or 6 to 9 wt%. The proportion of the heterocycle-containing acrylic monomer is preferably not less than the above range from the viewpoints of the heat resistance and the moisture resistance in the case of thinning the pressure-sensitive adhesive layer. In addition, the proportion of the heterocycle-containing acrylic monomer is preferably not more than the above range from the viewpoint of the moisture resistance in the case of thinning the pressure-sensitive adhesive layer. In addition, the proportion of the heterocycle-containing acrylic monomer is preferably not more than the above range from the viewpoint of improving the attaching property of the pressure-sensitive adhesive layer. In addition, the proportion of the heterocycle-containing acrylic monomer is preferably not more than the above range from the viewpoint of the pressure-sensitive adhesive force.

The (meth)acrylic acid is preferably acrylic acid.

The (meth)acrylic acid is used, for example, in a proportion of 0.5 to 5 wt% relative to the total amount of monomer components forming the (meth)acrylic polymer. The proportion of the (meth)acrylic acid may be, for example, 1 to 4.5 wt% or 1.5 to 4 wt%. The proportion of the (meth)acrylic acid is preferably not less than the above range from the viewpoint of heat resistance in the case of thinning the pressure-sensitive adhesive layer (pressure-sensitive adhesive/adhesive layer). In addition, the proportion of the (meth)acrylic acid is preferably not more than the above range from the viewpoints of the heat resistance and the moisture resistance in the case of thinning the pressure-sensitive adhesive layer. In addition, the proportion of the (meth)acrylic acid is preferably not more than the above range from the viewpoint of the pressure-sensitive adhesive force.

As the hydroxyalkyl (meth)acrylate, for example, one having a polymerizable functional group and having a hydroxyl group can be used without any particular limitation. Preferable examples of the hydroxyalkyl (meth)acrylate include hydroxyalkyl(meth)acrylates such as 2-hydroxyethyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate.

The hydroxyalkyl (meth)acrylate is used, for example, in proportion of 0.05 to 2 wt% relative to the total amount of monomer components forming the (meth)acrylic polymer. The proportion of the hydroxyalkyl (meth)acrylate may be,

for example, 0.075 to 1.5 wt% or 0.1 to 1 wt%. The proportion of the hydroxyalkyl (meth)acrylate is preferably not less than the above range from the viewpoint of the heat resistance in the case of thinning the pressure-sensitive adhesive layer (pressure-sensitive adhesive/adhesive layer). In addition, the proportion of the hydroxyalkyl (meth)acrylate is preferably not more than the above range from the viewpoints of the heat resistance and the moisture resistance in the case of thinning the pressure-sensitive adhesive layer. In addition, the proportion of the hydroxyalkyl (meth)acrylate is preferably not more than the above range from the viewpoint of the pressure-sensitive adhesive force.

As to the alkyl (meth)acrylate, for example, the alkyl group of the alkyl (meth)acrylate may have an average carbon number of about 1 to 12. Note that (meth)acrylate refers to acrylate and/or methacrylate, and has the same meaning as (meth) of the present invention. Specific examples of the alkyl (meth)acrylate include methyl (meth)acrylate, ethyl (meth)acrylate, n-butyl (meth)acrylate, 2-ethylhexyl (meth)acrylate, isooctyl (meth)acrylate, isononyl (meth)acrylate, and lauryl (meth)acrylate, and one of them may be used alone or two or more of them may be used in combination. Among these, alkyl (meth)acrylate having 1 to 9 carbon atoms in the alkyl group is preferable.

The alkyl (meth)acrylate is used, for example, in a proportion of 83 to 96.45 wt% relative to the total amount of the monomer components forming the(meth)acrylic polymer. The alkyl (meth)acrylate is usually the remainder other than the heterocycle-containing acrylic monomer, (meth)acrylic acid, and hydroxyalkyl (meth)acrylate.

As the monomer components forming the (meth)acrylic polymer, in addition to the monomer mentioned above, for example, any monomer other than those mentioned above may be used in a range of 10% or less of the total amount of the monomers, as long as the object of the present invention is not impaired.

Examples of such a monomer include acid anhydride group-containing monomers such as maleic anhydride and itaconic anhydride; a caprolactone adduct of acrylic acid; sulfonic acid group-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; and a phosphate group-containing monomer such as 2-hydroxyethyl acryloylylphosphate. In addition, nitrogen-containing vinyl monomers can be used, and examples thereof include maleimide, N-cyclohexylmaleimide, N-phenylmaleimide; (N-substituted) amide monomers such as (meth)acrylamide, N,N-dimethyl (meth)acrylamide, N,N-diethyl (meth)acrylamide, N-hexyl (meth)acrylamide, N-methyl (meth)acrylamide, N-butyl (meth)acrylamide, N -butyl (meth)acrylamide, N-methylol (meth)acrylamide, and N-methylolpropane (meth)acrylamide; alkylaminoalkyl (meth)acrylate monomers such as (meth)aminoethyl acrylate, aminopropyl (meth)acrylate, N,N-dimethylaminoethyl (meth)acrylate, t-butylaminoethyl (meth)acrylate, and 3-(3-pyrinidyl)propyl (meth)acrylate) acrylate; alkoxyalkyl (meth)acrylate monomers such as methoxyethyl (meth)acrylate and ethoxyethyl (meth)acrylate; and succinimide-based monomers such as N-(meth)acryloyloxymethylenesuccinimide, N-(meth)acryloyl-6-oxyhexamethylenesuccinimide, and N-(meth)acryloyl-8-oxyoctamethylenesuccinimide.

Vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, $\alpha$-methylstyrene, and N-vinylcaprolactam; cyanoacrylate monomers such as acrylonitrile and methacrylonitrile; epoxy group-containing acrylic monomers such as glycidyl (meth)acrylate; glycol-based acrylic ester monomers such as polyethylene glycol (meth)acrylate, polypropylene glycol (meth)acrylate, methoxyethylene glycol (meth)acrylate, and methoxypolypropylene glycol (meth)acrylate; and acrylic acid ester monomers such as tetrahydrofurfuryl (meth)acrylate, fluorine (meth)acrylate, silicone (meth)acrylate, and 2-methoxyethyl acrylate can also be used.

Further, examples of the copolymerizable monomer other than the above include silane-based monomers containing silicon atoms. Examples of the silane-based monomer include 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

The (meth)acrylic polymer used in the present invention may have, for example, a weight average molecular weight of 1.5 million to 2.8 million. The weight average molecular weight may be, for example, 1.7 million to 2.7 million or 2 million to 2.5 million. The weight average molecular weight is preferably not smaller than the above range from the viewpoints of the heat resistance and the moisture resistance in the case of thinning the pressure-sensitive adhesive layer. In addition, the weight average molecular weight is preferably not larger than the above range from the viewpoints of the durability, the attaching property, and the pressure-sensitive adhesive force in the case of thinning the pressure-sensitive adhesive layer. In the present invention, the weight average molecular weight is, for example, a value measured by gel permeation chromatography (GPC) and calculated in terms of polystyrene.

The method for producing such a (meth)acrylic polymer is not particularly limited, and known production methods such as solution polymerization, bulk polymerization, emulsion polymerization, and various radical polymerization can be appropriately selected. Further, the (meth)acrylic polymer obtained may be any of a random copolymer, a block copolymer, a graft copolymer, or the like.

In the solution polymerization, for example, ethyl acetate or toluene is used as a polymerization solvent. As a specific example of the solution polymerization, the reaction is carried out under an inert gas stream such as nitrogen

by adding a polymerization initiator, for example, at about 50 to 70°C for about 5 to 30 hours.

The polymerization initiator, the chain transfer agent, the emulsifier, and the like used in the radical polymerization are not particularly limited, and can be appropriately selected and used. The weight average molecular weight of the (meth)acrylic polymer can be controlled according to the amount of the polymerization initiator, the chain transfer agent, or the like, and the reaction conditions, and the amount of the (meth)acrylic polymer to be used is appropriately adjusted according to the types of the polymerization initiator, the chain transfer agent, and reaction conditions.

Examples of the polymerization initiator include, but not limited to, azo-based initiators such as 2,2'-azobisisobutyronitrile, 2,2'-azobis(2-amidinopropane)dihydrochloride, 2,2'-azobis[2-(5-methyl-2-imidazoline-2-yl)propane] dihydrochloride, 2,2'-azobis(2-methylpropionamidine)disulfate, 2,2'-azobis(N,N'-dimethyleneisobutylamidine), and 2,2'-azobis[N-(2-carboxyethyl)-2-methylpropionamidine]hydrate (VA-057, manufactured by Wako Pure Chemical Industries, Ltd.); persulfates such as potassium persulfate and ammonium persulfate; peroxide -based initiators such as di(2-ethylhexyl)peroxydicarbonate, di(4-t-butylcyclohexyl)peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethylhexanoate, di(4-methylbenzoyl)peroxide, dibenzoyl peroxide, t-butyl peroxyisobutyrate, 1,1-di(t-hexyl peroxy)cyclohexane, t-butyl hydroperoxide, and hydrogen peroxide; and redox initiators of a combination of peroxide and reducing agents, e.g., a combination of persulfate and sodium bisulfite and a combination of peroxide and sodium ascorbate.

One of the polymerization initiators may be used alone or two or more of them may be mixed to use. The total content of the polymerization initiator may be, for example, about 0.005 to 1 parts by weight or about 0.02 to 0.5 parts by weight relative to 100 parts by weight of the monomer.

In order to produce the (meth)acrylic polymer having the aforementioned weight average molecular weight by using, for example, 2,2'-azobisisobutyronitrile as the polymerization initiator, the amount of the polymerization initiator used may be, for example, about 0.06 to 0.2 parts by weight or about 0.08 to 0.175 parts by weight relative to 100 parts by weight of the total amount of the monomer components.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol. One of the chain transfer agents may be used alone or two or more of them may be mixed to use. The total content of the chain transfer agent is, for example, about 0.1 parts by weight or less relative to 100 parts by weight of the total amount of the monomer components.

Examples of the emulsifier used in the emulsion polymerization include anionic emulsifiers such as sodium lauryl sulfate, ammonium lauryl sulfate, sodium dodecylbenzene sulfonate, ammonium polyoxyethylene alkyl ether sulfate, and sodium polyoxyethylene alkyl phenyl ether sulfate; and nonionic emulsifiers such as polyoxyethylene alkyl ether, polyoxyethylene alkyl phenyl ether, polyoxyethylene fatty acid ester, and polyoxyethylene-polyoxypropylene block polymer. One of the emulsifiers may be used alone or two or more of them may be used in combination.

Further, specific examples of the emulsifying agent, into which a radically polymerizable functional group such as a propenyl group or an allyl ether group is introduced as a reactive emulsifier, include *Akuaron* HS-10, HS-20, KH-10, BC-05, BC-10, and BC-20 (all of which are manufactured by DKS Co., Ltd.) and ADEKA REASOAP SE10N (manufactured by ADEKA CORPORATION). Since the reactive emulsifier is incorporated into the polymer chain after the polymerization, the water resistance is improved, which is preferable. The amount of the emulsifier to be used is preferably 0.3 to 5 parts by weight relative to 100 parts by weight of the total amount of the monomer components, and more preferably 0.5 to 1 parts by weight relative to 100 parts by weight of the total amount of the monomer components from the viewpoints of the polymerization stability and the mechanical stability.

The content of the (meth)acrylic polymer in the pressure-sensitive adhesive/adhesive coating solution of the present invention is not particularly limited, and may be, for example, 3 mass% or more or 5 mass% or more, and may be, for example, 30 mass% or less, 20 mass% or less, or 10 mass% or less, relative to the total mass of the pressure-sensitive adhesive/adhesive coating solution of the present invention.

As described above, the pressure-sensitive adhesive/adhesive coating solution of the present invention includes a monomer having one or two reactive double bonds per molecule. The monomer having one or two reactive double bonds per molecule is not particularly limited, and examples thereof include acrylic monomers, methacrylic monomers, vinyl-based monomers, and allyl-based monomers, and acrylic monomers are more preferable from the viewpoint of the reaction rate of the graft reaction. The acrylic monomer is not particularly limited, and may be, for example, the same as the monomer exemplified as the monomer component of the (meth)acrylic polymer. In the monomer having one or two reactive double bonds per molecule, the structure of the side chain is not particularly limited, and a heterocycle-containing monomer is preferable from the viewpoint of achieving a high elastic modulus within a proper range and a reduction in a semi-polymer amount at the same time.

The content of the monomer having one or two reactive double bonds per molecule in the pressure-sensitive adhesive/adhesive coating solution of the present invention is not particularly limited, and may be, for example, 0.1 mass% or more, 0.5 mass% or more, or 1 mass% or more, and may be, for example, 30 mass% or less, 20 mass% or

less, or 10 mass% or less relative to the total mass of the (meth)acrylic polymer.

As described above, the pressure-sensitive adhesive/adhesive coating solution includes an isocyanate-based crosslinking agent. The isocyanate-based crosslinking agent is not particularly limited, and examples thereof include aromatic isocyanates such as tolylene diisocyanate and xylene diisocyanate; alicyclic isocyanates such as isophorone diisocyanate; and aliphatic isocyanates such as hexamethylene diisocyanate.

Specific examples of the isocyanate-based crosslinking agent include lower aliphatic polyisocyanates such as butylenediisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as a trimethylolpropane/tolylene diisocyanate trimer adduct (product name: Coronate® L, manufactured by Nippon Polyurethane Industry Co., Ltd.), a trimethylolpropane/hexamethylene diisocyanate trimer adduct (product name: Coronate® HL, manufactured by Nippon Polyurethane Industry Co., Ltd.), and isocyanurate form of hexamethylene diisocyanate (product name: Coronate® HX, manufactured by Nippon Polyurethane Industry Co., Ltd.); polyether polyisocyanate; polyester polyisocyanate; and adducts of these with various polyols, and polyisocyanates multifunctionalized with isocyanurate bonds, biuret bonds, allophanate bonds, and the like.

One of the isocyanate-based crosslinking agents may be used alone or two or more of them may be mixed to use. The total content of the isocyanate-based crosslinking agent may be, for example, 0.02 to 2 parts by mass, 0.04 to 1.5 parts by mass, or 0.05 to 1 part by mass relative to 100 parts by mass of the (meth)acrylic polymer. The content of the isocyanate-based crosslinking agent is preferably 0.02 parts by mass or more from the viewpoint of cohesive force, while it is preferably 2 parts by mass or less from the viewpoint of suppressing or preventing a decrease in adhesive force due to excessive crosslinking formation.

The pressure-sensitive adhesive/adhesive coating solution of the present invention may or may not further contain a crosslinking agent other than the isocyanate-based crosslinking agent. Examples of such a crosslinking agent include an organic crosslinking agent and a polyfunctional metal chelate. Examples of the organic crosslinking agent include an epoxy-based crosslinking agent and an imine-based crosslinking agent. The organic crosslinking agent is preferably an isocyanate-based crosslinking agent. A polyfunctional metal chelate is one in which a polyvalent metal is covalently or coordinately bonded to an organic compound. Examples of the polyvalent metallic atom include Al, Cr, Zr, Co, Cu, Fe, Ni, V, Zn, In, Ca, Mg, Mn, Y, Ce, Sr, Ba, Mo, La, Sn, and Ti. The atom in the organic compound to be covalently or coordinately bonded may be, for example, an oxygen atom, and examples of the organic compound include an alkyl ester, an alcohol compound, a carboxylic acid compound, an ether compound, and a ketone compound.

As described above, the pressure-sensitive adhesive/adhesive coating solution includes an organic peroxide. The organic peroxide is not particularly limited, and examples thereof include di(2-ethylhexyl)peroxydicarbonate, di(4-t-butylcyclohexyl)peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutyl peroxy-2-ethylhexanoate, di(4-methylbenzoyl)peroxide, dibenzoyl peroxide, t-butyl peroxyisobutyrate, 1,1-di(t-hexylperoxy)cyclohexane, and t-butyl hydroperoxide. One of the organic peroxides may be used alone of two or more of them may be used in combination.

The content of the organic peroxide in the pressure-sensitive adhesive/adhesive coating solution of the present invention is not particularly limited, and may be, for example, 0.1 mass% or more, 0.5 mass% or more, 1 mass% or more, 2 mass% or more, or 2.5 mass% or more, and may be, for example, 20 mass% or less, 10 mass% or less, 8 mass% or less, or 6 mass% or less relative to the total mass of the (meth)acrylic polymer.

The pressure-sensitive adhesive/adhesive coating solution of the present invention may further contain a solvent or the like. The solvent is not particularly limited, and for example, a polymerization solvent used in solution polymerization in the production of the (meth)acrylic polymer may be used as it is.

Further, for the pressure-sensitive adhesive/adhesive coating solution of the present invention, a tackifier, a plasticizer, a filler containing glass fibers, glass beads, metal powders, other inorganic powders, and the like may be used as appropriate, and various additives may be used as appropriate without departing from the scope of the present invention. Further, the pressure-sensitive adhesive layer may contain fine particles and exhibit light diffusibility.

In the laminate of the present invention, for example, when the pressure-sensitive adhesive coating solution of the present invention is used, it is easy to achieve both the pressure-sensitive adhesive force or the adhesive force and the resistance to penetration of the pressure-sensitive adhesive or the adhesive into the voids. The reason (mechanism) is conceivable as follows, for example. For example, by using a particular pressure-sensitive adhesive/adhesive to form a pressure-sensitive adhesive/adhesive layer, both the pressure-sensitive adhesive force or the adhesive force and the resistance to penetration of the pressure-sensitive adhesive or the adhesive into the voids can be achieved. More specifically, for example, by forming a pressure-sensitive adhesive/adhesive layer using a particular pressure-sensitive adhesive as described above, an intermediate layer is formed by uniting a part of the void-containing layer and a part of the pressure-sensitive adhesive/adhesive layer. By using such a particular pressure-sensitive adhesive, the intermediate layer is not excessively expanded even under the heat-humidifying durability test. In addition, the intermediate layer serves as a stopper, which makes it possible to suppress a reduction in the void fraction caused by filling the voids of the void-containing layer with the pressure-sensitive adhesive. Even if the molecular motion of the pressure-sensitive adhesive is increased when it is heated, if the elastic modulus of the pressure-sensitive adhesive is high, the intermediate layer made of a pressure-sensitive adhesive and a high void-containing layer tends to be a strong and dense stopper, which suppresses penetration of the pressure-sensitive adhesive into the high void-containing layer of the pressure-sensitive adhesive. In the pressure-sensitive adhesive/adhesive coating solution, a (meth)acrylic polymer, which is a main component, can be crosslinked with an isocyanate-based crosslinking agent by being heated. It is considered that the presence of a monomer having one or two reactive double bonds per molecule and an organic peroxide, which is a hydrogen-abstraction initiator, during the crosslinking reaction results in high-density crosslinking of even a semi-polymeric component having a molecular weight of 10000 or less in the pressure-sensitive adhesive/adhesive coating solution, thereby further suppressing the penetration of the component from the pressure-sensitive adhesive/adhesive coating solution into the void-containing layer at a high level. That is, it is considered that while a semi-polymeric component having a molecular weight of 10000 or less is prone to penetrate into the voids of the void-containing layer due to its small molecular size, the penetration of the void-containing layer into the voids is suppressed by increasing the molecular size by crosslinking reaction. Furthermore, it is presumed that the presence of a monomer having one or two reactive double bonds per molecule during the crosslinking reaction allows grafting reaction with the (meth)acrylic polymer main chain and high-density crosslinking starting from the graft chain, thereby decreasing the amount of the semi-polymer that can be a sol component itself. However, these mechanisms are merely illustrative and do not limit the invention in any way.

In the pressure-sensitive adhesive/adhesive coating solution of the present invention, it is preferable that one or two reactive double bonds be present per molecule for efficiently crosslinking the main chains during the grafting reaction.

In the present invention, "(meth)acrylic" means at least one of acrylic and methacrylic. For example, "(meth)acrylic acid" means at least one of acrylic acid and methacrylic acid. Further, "(meth)acrylic acid ester" means at least one of an acrylic acid ester and a methacrylic acid ester, and "methyl (meth)acrylate" means at least one of methyl acrylate and methyl methacrylate.

In the present invention, the term "(meth)acrylic polymer" refers to a polymer having a structure obtained by polymerizing a component containing at least one element selected from the group consisting of acrylic acid, methacrylic acid, acrylic acid ester, methacrylic acid ester, monomer having an acryloyl group, and monomer having a methacryloyl group, for example. The component may or may not contain at least one substance other than at least one element selected from the group consisting of acrylic acid, methacrylic acid, acrylic acid ester, methacrylic acid ester, monomer having an acryloyl group, and monomer having a methacryloyl group.

In the present invention, the term "acrylic monomer" refers to a monomer including at least one element selected from the group consisting of acrylic acid, methacrylic acid, acrylic acid ester, methacrylic acid ester, a monomer having an acryloyl group, and a monomer having a methacryloyl group.

In the present invention, the "isocyanate-based crosslinking agent" refers to, for example, a crosslinking agent having an isocyanate group (isocyanato group) in a molecule. In the present invention, the number of isocyanate groups (isocyanato groups) per molecule of the isocyanate-based crosslinking agent is not particularly limited, and is preferably 2 or more, and, for example, 2 or 3 or 4, and the upper limit value is not particularly limited, and is, for example, 10 or less.

[6. Void-containing layer production method and laminate production method]

The void-containing layer production method and laminate production method of the present invention are not particularly limited, and can be performed by, for example, the production method described below. The following description, however, is illustrative and does not limit the invention in any way. In the following description, the void-containing layer production method of the present invention may be referred to as a "void-containing layer production method of the present invention".

[6-1. Void-containing layer production method]

The void-containing layer production method of the present invention is described below with reference to examples. The void-containing layer production method of the present invention, however, is not limited in any way by the following description.

The void-containing layer of the present invention may be formed, for example, of a silicon compound. Also, the void-containing layer of the present invention may be, for example, a void-containing layer formed by chemically bonding microporous particles. For example, the microporous particles may be gel pulverized products. The void-containing layer of the present invention may have, for example, the $R^1$ group and the $R^2$ group in addition to the skeleton formed by chemical bonding among the microporous particles. Further, for example, a part or the whole of the silicon

compound may be a compound containing the $R^1$ group and the $R^2$ group. Further, for example, a compound containing the $R^1$ group and a compound containing the $R^2$ group may be used as a part or the whole of the silicon compound in addition to or in place of the compound containing the $R^1$ group and the $R^2$ group. The compound containing the $R^1$ group and the $R^2$ group, the compound containing the $R^1$ group, and the compound containing the $R^2$ group are not particularly limited, and are, for example, as described above. The content of the compound containing the $R^1$ group and the $R^2$ group, the compound containing the $R^1$ group, and the compound containing the $R^2$ group in the silicon compound is not particularly limited, and may be appropriately set so that the content of the $R^1$ group and the $R^2$ group in the particles is suitable, for example. Specifically, for example, the silicon compound may have 3 to 20 mass% of vinyltrimethoxysilane as the compound containing the $R^2$ group. In this case, the remainder of the silicon compound (other than vinyltrimethoxysilane) is not particularly limited, and may be, for example, methyltrimethoxysilane (MTMS). The content of the compound containing the $R^1$ group in the silicon compound is not particularly limited, and may be, for example, 99 mass% or less, 98.5 mass% or less, or 98 mass% or less, and may be, for example, 50 mass% or more, 60 mass% or more, or 70 mass% or more relative to the total mass of the silicon compound. The content of the compound containing the $R^2$ group in the silicon compound is not particularly limited, and may be, for example, 50 mass% or less, 40 mass% or less, or 30 mass% or less, and may be, for example, 1 mass% or more, 1.5 mass% or more, 1.8 mass% or more, or 2 mass% or more relative to the total mass of the silicon compound.

The void-containing layer of the present invention may include, in addition to a skeleton formed by chemical bonding between the microporous particles, nanoparticles, surfaces of which being modified with the compound having the surface orientation, for example.

In the void-containing layer production method of the present invention, for example, pulverizing a gel of pulverizing the porous gel material may be performed by one stage, however, is preferably performed by multiple stages. The number of the pulverization stages is not limited to particular numbers and may be, for example, two, three, or more.

In the present invention, the shape of the "particle" (e.g., the particle of the gel pulverized product) is not limited to particular shapes and may be, for example, a spherical shape or non-spherical shape. In the present invention, the particle of the gel pulverized product may be, for example, a sol-gel beaded particle, a nanoparticle (hollow nanosilica/nanoballoon particle), or a nanofiber.

In the present invention, for example, the gel is preferably a porous gel, and the gel pulverized product is preferably a porous gel pulverized product. The present invention, however, is by no means limited thereto.

In the present invention, the gel pulverized product may be in at least one form selected from the group consisting of particulate forms, fibrous forms, and plate-like forms, for example. The particulate structural unit and the plate-like structural unit may be made of an inorganic substance, for example. The constituent element(s) of the particulate structural units includes at least one element selected from the group consisting of Si, Mg, Al, Ti, Zn, and Zr, for example. The particulate structure (structural unit) may be a solid particle or a hollow particle, and specific examples thereof include silicone particles, silicone particles having micropores, silica hollow nanoparticles, and silica hollow nanoballoons. The fibrous structural unit may be, for example, a nanofiber with a nano-sized diameter, and specific examples thereof include cellulose nanofibers and alumina nanofibers. The plate-like structural unit may be, for example, nanoclay, and specific examples thereof include nano-sized bentonite (e.g., Kunipia F (product name)). The fibrous structural unit is not particularly limited, and may be, for example, at least one fibrous substance selected from the group consisting of carbon nanofibers, cellulose nanofibers, alumina nanofibers, chitin nanofibers, chitosan nanofibers, polymer nanofibers, glass nanofibers, and silica nanofibers.

In the void-containing layer production method of the present invention, the pulverizing a gel (e.g., multiple pulverization stages including the first pulverization stage and the second pulverization stage) may be performed in "another solvent", for example. The "another solvent" is described in detail below.

In the present invention, the "solvent" (e.g., a gel production solvent, a void-containing layer production solvent, a replacement solvent) may not dissolve a gel or pulverized products thereof, and the gel or the pulverized products thereof may be dispersed or precipitated in the solvent.

The volume average particle diameter of the gel after the first pulverization stage may be, for example, from 0.5 to 100 μm, from 1 to 100 μm, from 1 to 50 μm, from 2 to 20 μm, or from 3 to 10 μm. The volume average particle diameter of the gel after the second pulverization stage may be, for example, from 10 to 1000 nm, from 100 to 500 nm, or from 200 to 300 nm. The volume average particle diameter indicates a variation in particle size of the pulverized products in the solution containing the gel (gel-containing solution). The volume average particle diameter can be measured using a particle size distribution analyzer based on dynamic light scattering, laser diffraction, or the like, or using an electron microscope such as a scanning electron microscope (SEM) or a transmission electron microscope (TEM), for example.

The void-containing layer production method of the present invention further includes, for example, gelling a massive porous material in a solvent to obtain a gel. In this case, the gel obtained by the gelling may be used in the first pulverization stage among the pulverization stages(e.g., the first pulverization stage), for example.

The void-containing layer production method of the present invention further includes, for example, aging the

gel in a solvent. In this case, the gel after the aging may be used in the first pulverization stage among the pulverization stages (e.g., the first pulverization stage), for example.

The void-containing layer production method of the present invention further includes replacing the solvent with "another solvent" after the gelling, for example. In this case, the gel in "another solvent" may be used in the first pulverization stage among the pulverization stages(e.g., the first pulverization stage), for example.

For example, the pulverization of the porous material is controlled while measuring the shear viscosity of the solution in at least one of the pulverization stages among multiple stages (e.g., at least one of the first pulverization stage and the second pulverization stage) in the void-containing layer production method of the present invention.

At least one of the pulverization stages among multiple stages (e.g., at least one of the first pulverization stage and the second pulverization stage) in the void-containing layer production method of the present invention is performed by, for example, high pressure media-less pulverization.

In the void-containing layer production method of the present invention, the gel is, for example, a gel of a silicon compound at least containing three or less functional groups having saturated bonds.

Hereinafter, in the void-containing layer production method of the present invention, the gel pulverized product-containing solution obtained by processes including the pulverizing a gel may be referred to as the "gel pulverized product-containing solution of the present invention".

According to the gel pulverized product-containing solution of the present invention, for example, the void-containing layer of the present invention as a functional porous material can be formed by forming a coating film of the solution and chemically bonding the pulverized products in the coating film. According to the gel pulverized product-containing solution of the present invention, for example, the void-containing layer of the present invention can be applied to various objects. Therefore, the gel pulverized product-containing solution of the present invention and the production method of the same are useful, for example, in the production of the void-containing layer of the present invention.

Since the gel pulverized product-containing solution of the present invention has, for example, significantly excellent uniformity, for example, when the void-containing layer of the present invention is applied to an optical member, the appearance of the member can be improved.

The gel pulverized product-containing solution may be, for example, a gel pulverized product-containing solution for obtaining a layer (void-containing layer) having a high void fraction by applying (coating) the gel pulverized product-containing solution onto a base and then drying the coated gel pulverized product-containing solution. The gel pulverized product-containing solution of the present invention may be, for example, a gel pulverized product-containing solution for obtaining a porous material (a bulk body having a large thickness or a massive bulk body) having a high void fraction. The bulk body can be obtained, for example, by performing bulk film formation using the gel pulverized product-containing solution.

For example, the void-containing layer of the present invention having a high void fraction can be produced by a production method including producing the gel pulverized product-containing solution of the present invention, adding nanoparticles, surfaces of which being modified with the compound having the surface orientation, to the gel pulverized product-containing solution, coating the gel pulverized product-containing solution onto a base to form a coating film, and drying the coating film.

Further, for example, as shown in FIGs. 2 and 3, a laminated film in the form of a roll (laminated film roll) can be produced by a production method including the producing the gel pulverized product-containing solution of the present invention, feeding the rolled resin film, coating the gel pulverized product-containing solution onto the fed resin film to form a coating film, drying the coating film, and, after the drying, winding up the laminated film in which the void-containing layer of the present invention is formed on the resin film.

[5-2. Gel pulverized product-containing solution and gel pulverized product-containing solution production method]

The gel pulverized product-containing solution of the present invention contains, for example, gel pulverized products pulverized by the pulverizing a gel (e.g., the first pulverization stage and the second pulverization stage) and the other solvent(s).

The void-containing layer production method of the present invention may include, for example, as described above, multiple pulverization stages of the pulverizing a gel (e.g., porous gel material), which may include, for example, the first pulverization stage and the second pulverization stage. The present invention will be described below with reference to examples in which the gel pulverized product-containing solution production method of the present invention includes the first pulverization stage and the second pulverization stage. The following description is made mainly for the case where the gel is a porous material (porous gel material). The present invention, however, is by no means limited thereto, and the description of the case where the gel is a porous material (porous gel material) can be applied in an analogical manner to other cases. Hereinafter, the multiple pulverization stages (e.g., the first pulverization stage and the second pulverization stage) in the void-containing layer production method of the present invention may be collectively also referred to as the "pulverizing a gel".

The gel pulverized product-containing solution of the present invention can be used in the production of a functional porous material that exhibits the same function as an air layer (e.g., a low refractive index) as described below. The functional porous material may be, for example, the void-containing layer of the present invention. Specifically, the gel pulverized product-containing solution obtained by the production method of the present invention contains pulverized products of the porous gel material, the three-dimensional structure of the non-pulverized porous gel material in the pulverized products is destroyed, whereby a new three-dimensional structure different from that of the non-pulverized porous gel material can be formed in the pulverized products. Thus, for example, a coating film (functional porous material precursor) formed using the gel pulverized product-containing solution becomes a layer having a new pore structure (new void-containing structure) that cannot be obtained in a layer formed using the non-pulverized porous gel material. Thereby, the layer having a new pore structure can exhibit the same function (have, for example, a low refractive index) as the air layer. Further, for example, since the pulverized products of the gel pulverized product-containing solution of the present invention have residual silanol groups, after forming a new three-dimensional structure as the coating film (functional porous material precursor), the pulverized products can be bonded chemically to each other. Thus, even though the functional porous material to be formed has a structure with void spaces, it can maintain sufficient strength and sufficient flexibility. Therefore, according to the present invention, the functional porous material can be easily and simply applied to various objects. The gel pulverized product-containing solution obtained by the production method of the present invention is very useful, for example, in the production of the porous structure which can be a substitute for an air layer. In the case of forming an air layer, it is necessary to laminate the components with a space therebetween by providing a spacer or the like to form an air layer between components, for example. However, the functional porous material formed by using the gel pulverized product-containing solution of the present invention can exhibit the same function as the air layer by simply disposing it on an intended site. Therefore, as described above, the present invention can allow various objects to exhibit the same function as that of an air layer easily and simply as compared with the case of forming the air layer.

The gel pulverized product-containing solution of the present invention also can be referred to as, for example, a solution for forming the functional porous material or a solution for forming a void-containing layer or a low refractive index layer. In the gel pulverized product-containing solution of the present invention, the porous material is the pulverized product.

The range of the volume average particle diameter of the pulverized products (particles of porous gel material) in the gel pulverized product-containing solution of the present invention is, for example, from 10 to 1000 nm, from 100 to 500 nm, or from 200 to 300 nm. The volume average particle diameter indicates a variation in particle size of the pulverized products in the gel pulverized product-containing solution according to the present invention. The volume average particle diameter can be measured using a particle size distribution analyzer based on dynamic light scattering, laser diffraction, or the like, or using an electron microscope such as a scanning electron microscope (SEM) or a transmission electron microscope (TEM), as described above, for example.

The concentration of the gel pulverized products in the gel pulverized product-containing solution of the present invention is not limited to particular concentrations and is, for example, from 2.5 to 4.5 wt%, from 2.7 to 4.0 wt%, or from 2.8 to 3.2 wt% as particles with a particle diameter from 10 to 1000 nm.

The gel (e.g., porous gel material) in the gel pulverized product-containing solution of the present invention is not limited to particular gels and can be, for example, a silicon compound.

The silicon compound is not limited to particular compounds and can be, for example, a silicon compound at least containing three or less functional groups having saturated bonds. "Containing three or less functional groups having saturated bonds" means that the silicon compound contains three or less functional groups and these functional groups have saturated bonds with silicon (Si).

The silicon compound is, for example, a compound represented by the following chemical formula (2).

$$\left(R^1\right)_{4-x}\!-\!Si\!-\!\left(OR^2\right)_x \quad \cdots (2)$$

In the chemical formula (2), for example, X is 2, 3, or 4, $R^1$ and $R^2$ are each a linear or branched alkyl group, $R^1$ and $R^2$ may be the same or different from each other, $R^1$ may be the same or different from each other when X is 2, and $R^2$ may be the same or different from each other.

X and $R^1$ are the same as those in the chemical formula (1) to be described below, for example. Regarding $R^2$, reference can be made to the description as to the examples of $R^1$ in the chemical formula (1), for example.

As the silicon compound, for example, a compound containing the $R^1$ group and the $R^2$ group may be used in addition to or in place of the silicon compound represented by the formula (2). Further, for example, as described above,

a compound containing the $R^1$ group and a compound containing the $R^2$ group may be used in addition to or in place of the compound containing the $R^1$ group and the $R^2$ group.

A specific example of the silicon compound represented by the chemical formula (2) is the one in which X is 3, which is a compound represented by the following chemical formula (2'). In the chemical formula (2'), $R^1$ and $R^2$ are the same as those in the chemical formula (2). When $R^1$ and $R^2$ are both methyl groups, the silicon compound is trimethoxy(methyl)silane (also referred to as "MTMS" hereinafter).

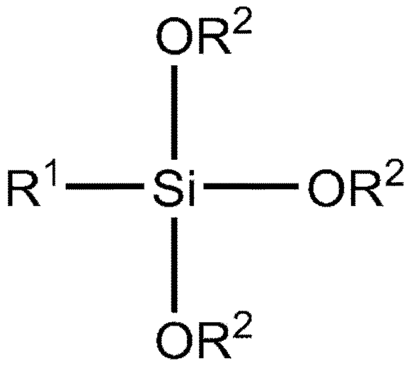

• • • (2')

In the gel pulverized product-containing solution of the present invention, the solvent can be, for example, a dispersion medium. The dispersion medium (hereinafter, also referred to as "coating solvent") is not limited to particular media and can be, for example, a gelation solvent or a pulverization solvent and is preferably the pulverization solvent. The coating solvent contains an organic solvent having a boiling point of 70°C or higher and less than 180°C and a saturation vapor pressure of 15 kPa or less at 20°C.

Examples of the organic solvent include carbon tetrachloride, 1,2-dichloroethane, 1,1,2,2-tetrachloroethane, trichloroethylene, isopropyl alcohol, isopropyl alcohol, isopentyl alcohol, 1-pentyl alcohol (pentanol), ethyl alcohol (ethanol), ethylene glycol monoethyl ether, ethylene glycol monoethyl ether acetate, ethylene glycol mono-n-butyl ether, ethylene glycol monomethyl ether, xylene, cresol, chlorobenzene, isobutyl acetate, isopropyl acetate, isopentyl acetate, ethyl acetate, n-butyl acetate, n-propyl acetate, n-pentyl acetate, cyclohexanol, cyclohexanone, 1,4-dioxane, N,N-dimethylformamide, styrene, tetrachloroethylene, 1,1,1-trichloroethane, toluene, 1-butanol, 2-butanol, methyl isobutyl ketone, methyl ethyl ketone, methyl cyclohexanol, methyl cyclohexanone, methyl n-butyl ketone, and isopentanol. The dispersion medium may contain an appropriate amount of a perfluoro-based surfactant or silicon-based surfactant that reduces the surface tension.

The gel pulverized product-containing solution can be, for example, a sol particle solution obtained by dispersing the pulverized products in the dispersion medium. By coating the gel pulverized product-containing solution of the present invention onto the base, drying the coated gel pulverized product-containing solution, and then chemically crosslinking the particles in the gel pulverized product-containing solution in the bonding to be described below, for example, a void-containing layer having film strength at or above a certain level can be formed continuously. The term "sol" as used in the present invention refers to a state where, by pulverizing a three-dimensional structure of a gel, pulverized products (i.e., particles of porous sol material each having a three-dimensional nanostructure holding part of the void-containing structure) are dispersed in a solvent and exhibit fluidity.

A catalyst for chemically bonding the pulverized products of the gel to each other can be added to the gel pulverized product-containing solution of the present invention, for example. The content of the catalyst is not particularly limited, and is, for example, from 0.01 to 20 wt%, from 0.05 to 10 wt%, or from 0.1 to 5 wt%, relative to the weight of the gel pulverized products.

The gel pulverized product-containing solution of the present invention may contain a crosslinking assisting agent for indirectly bonding the pulverized products of the gel, for example. The content of the crosslinking assisting agent is not particularly limited, and is, for example, from 0.01 to 20 wt%, from 0.05 to 15 wt%, or from 0.1 to 10 wt% relative to the weight of the gel pulverized product.

The proportion of functional groups that are not involved in a crosslinked structure inside the gel among functional groups of structural unit monomers of the gel in the pulverized product-containing solution of the present invention may be, for example, 30 mol% or less, 25 mol% or less, 20 mol% or less, or 15 mol% or less, and may be, for example, 1 mol% or more, 2 mol% or more, 3 mol% or more, or 4 mol% or more. The proportion of functional groups that are not involved in the crosslinked structure inside the gel can be measured as follows, for example.

(Measurement method of proportion of functional groups that are not involved in crosslinked structure inside gel)

The gel after drying is subjected to a solid state NMR (Si-NMR), and the proportion of residual silanol groups that are not involved in the crosslinked structure (functional groups that are not involved in the crosslinked structure inside the gel) is calculated from the peak ratio obtained by the NMR. Further, when the functional group is other than the silanol group, the proportion of functional groups that are not involved in the crosslinked structure inside the gel can be calculated from the peak ratio obtained by the NMR according to this method.

The gel pulverized product-containing solution production method of the present invention will be described below with reference to examples. Regarding the gel pulverized product-containing solution of the present invention, reference can be made to the following description unless otherwise stated.

Mixing particles (pulverized products) of the porous gel material and the solvent is optional in the gel pulverized product-containing solution production method of the present invention, and may or may not be included. A specific example of the mixing includes, for example, mixing a dispersion medium and pulverized products of a gelled silicon compound (silicon compound gel) obtained from a silicon compound at least containing three or less functional groups having saturated bonds. In the present invention, the pulverized products of the porous gel material can be obtained from the porous gel material by the pulverizing a gel to be described below, for example. The pulverized products of the porous gel material can be obtained from the porous gel material that is obtained after an aging treatment in the aging to be described below, for example.

In the gel pulverized product-containing solution production method of the present invention, the gelling is, for example, gelling a massive porous material in a solvent to generate a porous gel material. A specific example of the gelling can be, for example, gelling a silicon compound at least containing three or less functional groups having saturated bonds in a solvent to generate a silicon compound gel.

The gelling will be described below with reference to the case where the porous material is a silicon compound as an example.

The gelling is, for example, gelling the monomer silicon compound by a dehydration condensation reaction in the presence of a dehydration condensation catalyst, and by the gelling, a silicon compound gel is obtained. The silicon compound gel contains, for example, a residual silanol group, and the residual silanol group is preferably adjusted, as appropriate, according to the chemical bonding among pulverized products of the silicon compound gel to be described below.

In the gelling, the silicon compound is only required to be gelled by a dehydration condensation reaction and is not limited to particular compounds. For example, the silicon compounds are bonded by the dehydration condensation reaction. Bonding between the silicon compounds is, for example, hydrogen bond or intermolecular force bond.

The silicon compound can be, for example, a silicon compound represented by the chemical formula (1). The silicon compound represented by the chemical formula (1) contains hydroxyl groups. Thus, silicon compounds of the chemical formula (1) can be bonded to each other by hydrogen bond or intermolecular force bond via their hydroxyl groups, for example.

$$\left(R^1\right)_{4-x}\!-\!Si\!-\!\left(OH\right)_x \quad \cdots (1)$$

In the chemical formula (1), X is 2, 3, or 4, and $R^1$ is a linear or a branched alkyl group, for example. The number of carbon atoms in $R^1$ is 1 to 6, 1 to 4, or 1 to 2, for example. The linear alkyl group is a methyl group, an ethyl group, a propyl group, a butyl group, a pentyl group, or a hexyl group, for example. The branched alkyl group is an isopropyl group or an isobutyl group, for example. The X is 3 or 4, for example.

A specific example of the silicon compound represented by the chemical formula (1) is the one in which X is 3, which is a compound represented by the following chemical formula (1'). In the chemical formula (1'), $R^1$ is the same as that in the chemical formula (1), and is, for example, a methyl group. When $R^1$ is a methyl group, the silicon compound is tris(hydroxy)methylsilane. When X is 3, the silicon compound is a trifunctional silane having three functional groups, for example.

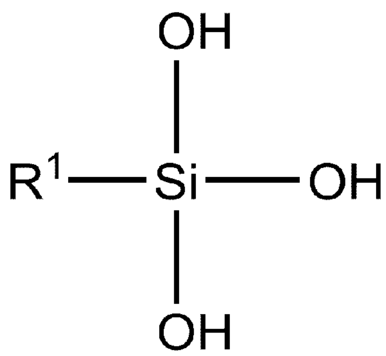

・・・(1')

Another specific example of the silicon compound represented by the chemical formula (1) is the one in which X is 4. In this case, the silicon compound is a tetrafunctional silane having four functional groups, for example.

The silicon compound may be a precursor for forming a silicon compound represented by the chemical formula (1) by hydrolysis, for example. The precursor is not limited as long as it can generate the silicon compound when it is hydrolyzed, for example. A specific example of the silicon compound precursor is a compound represented by the chemical formula (2).

When the silicon compound is a precursor represented by the chemical formula (2), the production method of the present invention may further include hydrolyzing the precursor prior to the gelling, for example.

The method for the hydrolysis of the precursor is not limited to particular methods, and the precursor can be hydrolyzed through a chemical reaction in the presence of a catalyst, for example. Examples of the catalyst include acids such as an oxalic acid and an acetic acid. The hydrolysis reaction can be caused by, for example, adding an aqueous oxalic acid solution dropwise slowly to a solution of the silicon compound precursor in dimethylsulfoxide at room temperature and then stirring the resultant mixture for about 30 minutes. In hydrolysis of the silicon compound precursor, for example, by hydrolyzing the alkoxy group of the silicon compound precursor completely, it is possible to more efficiently achieve gelation and aging to be performed subsequently and heating and immobilization to be performed after the formation of a void-containing structure.

In the present invention, the silicon compound can be, for example, a hydrolysate of trimethoxy(methyl)silane.

The monomer silicon compound is not limited to particular compounds and can be selected, as appropriate, according to the intended use of the functional porous material to be produced, for example. In production of the functional porous material, the silicon compound preferably is the trifunctional silane in terms of its excellent properties to achieve a low refractive index when a premium is placed on the low refractive index, for example. The silicon compound preferably is the tetrafunctional silane from the viewpoint of imparting high abrasion resistance when a premium is placed on strength (e.g., abrasion resistance), for example. As the silicon compound as a raw material of the silicon compound gel, only one type of the silicon compound may be used, or two or more types of the silicon compounds may be used in combination, for example. Specifically, the silicon compound may be made up of the trifunctional silane only, the tetrafunctional silane only, or both the trifunctional silane and the tetrafunctional silane, for example. Also, the silicon compounds may further include a silicon compound(s) other than the trifunctional silane and the tetrafunctional silane, for example. When two or more types of silicon compounds are used as the silicon compounds, the ratio thereof is not limited to particular ratios and can be set as appropriate.

The gelation of the porous material such as the silicon compound can be achieved by a dehydration condensation reaction of the porous bodies, for example. The dehydration condensation reaction preferably is performed in the presence of a catalyst, for example. Examples of the catalyst include dehydration condensation catalysts such as: acid catalysts including a hydrochloric acid, an oxalic acid, and a sulfuric acid; and base catalysts including ammonia, potassium hydroxide, sodium hydroxide, and ammonium hydroxide. The dehydration condensation catalyst particularly preferably is a base catalyst. In the dehydration condensation reaction, the amount of the catalyst to be added relative to the porous material is not limited to particular materials, and is, for example, from 0.01 to 10 mol, from 0.05 to 7 mol, or from 0.1 to 5 mol per mole of the porous material.

The gelation of the porous material such as the silicon compound preferably is performed in a solvent, for example. The proportion of the porous material in the solvent is not limited to particular proportions. Examples of the solvent include dimethylsulfoxide (DMSO), N-methylpyrrolidone (NMP), N,N-dimethylacetamide (DMAc), dimethylformamide (DMF), γ-butyrolactone (GBL), acetonitrile (MeCN), and ethylene glycol ethyl ether (EGEE). One type of the solvent may be used alone or two or more types of the solvents may be used in combination, for example. Hereinafter, the solvent used for the gelation also is referred to as a "gelation solvent".

The conditions for the gelation are not limited to particular conditions. The treatment temperature for treating the solvent containing the porous material is, for example, from 20°C to 30°C, from 22°C to 28°C, or from 24°C to 26°C,

and the treatment time for treating the same is, for example, from 1 to 60 minutes, from 5 to 40 minutes, or from 10 to 30 minutes. When the dehydration condensation reaction is performed, the treatment conditions are not limited to particular conditions, and the treatment conditions given above as examples also apply to the dehydration condensation reaction. When the porous material is a silicon compound, siloxane bonds are grown and silica primary particles are formed by the gelation, for example. As the reaction further proceeds, the primary particles are connected in the form of a string of beads, whereby a gel having a three-dimensional structure is generated.

The form of the gel obtained from the porous material in the gelling is not limited to particular forms. The term "gel" generally refers to a solidified state of a solute where particles of the solute have lost their independent mobility owing to interaction and form an aggregate. Among various types of gels, a "wet gel" generally refers to a gel containing a dispersion medium in which particles of a solute build a uniform structure, and a "xerogel" generally refers to a gel from which a solvent is removed and in which particles of a solute form a network structure with void spaces. In the present invention, for example, a wet gel is preferably used as the silicon compound gel. When the porous gel material is a silicon compound gel, the amount of a residual silanol group in the silicon compound gel is not limited to particular amounts and can be, for example, in the same range to be described below.

The porous gel material per se obtained by the gelation may be subjected to the replacing a solvent and the first pulverization stage or may be subjected to an aging treatment in the aging prior to the first pulverization stage, for example. In the aging, the gelled porous material (porous gel material) is aged in a solvent. The conditions for the aging treatment in the aging are not limited to particular conditions, and for example, the porous gel material may be incubated in a solvent at a predetermined temperature. For example, by further growing the primary particles of the porous gel material having a three-dimensional structure obtained by the gelation through the aging treatment, it is possible to increase the size of the particles themselves. As a result, the contact area at the neck portion where the particles are in contact with each other increases so that the contact state can be changed from point contact to surface contact. The above-described aging treatment of the porous gel material improves the strength of the gel itself, for example, whereby the strength of the three-dimensional basic structures of the pulverized products after pulverization can be improved. As a result, it is possible to reduce the possibility that, in the drying to be performed after coating a base with the gel pulverized product-containing solution according to the present invention to form a coating film, pores in the void-containing structure formed by deposition of the three-dimensional basic structures may become smaller as the solvent in the coating film volatilizes during the drying, for example.

As to the temperature for the aging treatment, the lower limit thereof is, for example, 30°C or higher, 35°C or higher, or 40°C or higher, the upper limit thereof is, for example, 80°C or lower, 75°C or lower, or 70°C or lower, and the range thereof is, for example, from 30°C to 80°C, from 35°C to 75°C, or from 40°C to 70°C. The predetermined time is not limited particularly, and the lower limit thereof is, for example, 5 hours or more, 10 hours or more, or 15 hours or more, the upper limit thereof is, for example, 50 hours or less, 40 hours or less, or 30 hours or less, and the range thereof is, for example, from 5 to 50 hours, from 10 to 40 hours, or from 15 to 30 hours. Optimal aging conditions are, for example, as described above, conditions set to increase the size of the primary particles and to increase the contact area at the neck portion in the porous gel material. Furthermore, it is preferable to take the boiling point of the solvent used into consideration for the temperature in the aging treatment in the aging, for example. For example, when the aging temperature is too high in the aging treatment, the solvent may volatilize excessively to cause defectiveness such that the pores in the three-dimensional void-containing structure are closed due to the condensation of the concentration of the coating solution. On the other hand, for example, when the aging temperature is too low in the aging treatment, the effect of the aging cannot be obtained sufficiently. Besides, variation in temperature over time in a mass production process increases, which may result in products with poor quality.

In the aging treatment, the same solvent as in the gelling can be used, for example. Specifically, it is preferable that a reactant obtained after the gelation treatment (i.e., the solvent containing the porous gel material) be subjected to the aging treatment as it is. When the porous gel material is the silicon compound gel, the amount of residual silanol groups contained in the silicon compound gel having been subjected to the gelation and the subsequent aging treatment by mole indicates, for example, the proportion of the residual silanol groups, assuming that the amount of the alkoxy groups in the raw material used in the gelation (e.g., the silicon compound or the precursor thereof) by mole is 100. The lower limit thereof is, for example, 50% or more, 40% or more, or 30% or more, the upper limit thereof is, for example, 1% or less, 3% or less, or 5% or less, and the range thereof is, for example, from 1% to 50%, from 3% to 40%, or from 5% to 30%. For the purpose of increasing the hardness of the silicon compound gel, it is preferable that the amount of the residual silanol groups by mole be smaller, for example. When the amount of the residual silanol groups by mole is too large, there is a possibility that the void-containing structure cannot be maintained until the crosslinking of the functional porous material precursor is completed in formation of the functional porous material, for example. On the other hand, when the number of moles of the silanol groups is too small, there is a possibility that, in the bonding, the functional porous material precursor cannot be crosslinked, so that a sufficient film strength cannot be imparted, for example. The above description is directed to an example where residual silanol groups are used. When the silicon compounds that have been modified with various reactive functional groups are used as raw materials of the silicon

compound gel, for example, the same phenomenon can be applied to each of the reactive functional groups.

The porous gel material per se obtained by the gelation is subjected to, for example, an aging treatment in the aging, then the replacing a solvent, and thereafter the pulverizing a gel. In the replacing a solvent, the solvent is replaced with another solvent.

In the present invention, the pulverizing a gel is, as described above, pulverizing the porous gel material. The porous gel material after the gelling may be subjected to the pulverization, and the porous gel material having been subjected to the aging treatment may further be subjected to the pulverization, for example.

Furthermore, as described above, controlling a gel form of controlling the shape and the size of the gel may be performed prior to the replacing a solvent (e.g., after the aging). The shape and the size of the gel to be controlled in the controlling a gel form is not limited to particular shapes and sizes and are, for example, as described above. The controlling a gel form may be performed by dividing the gel into solids (3D solid) in an appropriate size and shape, for example.

Moreover, as described above, the pulverizing a gel is performed after subjecting the gel to the replacing a solvent. In the replacing a solvent, the solvent is replaced with another solvent. When the solvent is not replaced with another solvent, the following problem may arise. For example, the catalyst and solvent used in the gelling remain after the aging to cause gelation of the solution over time and affect the pot life of the gel pulverized product-containing solution to be obtained finally, and the drying efficiency at the time when the coating film formed using the gel pulverized product-containing solution is dried is reduced. Hereinafter, such a solvent in the pulverizing a gel is also referred to as a "pulverization solvent".

The pulverization solvent (another solvent) is not limited to particular solvents, and may be, for example, an organic solvent. The organic solvent may be, for example, the one having a boiling point of 140°C or lower, 130°C or lower, 100°C or lower, or 85°C or lower. Specific examples thereof include isopropyl alcohol (IPA), ethanol, methanol, butanol, n-butanol, 2-butanol, isobutyl alcohol, pentyl alcohol, propylene glycol monomethyl ether (PGME), methyl cellosolve, and acetone. One type of the pulverization solvent may be used, or two or more types of the pulverization solvents may be used in combination, for example.

When the pulverization solvent has a low polarity, for example, the replacing a solvent is performed by multiple solvent replacement stages, and in the solvent replacement stages, the hydrophilicity of such a solvent may be caused to be lower in a subsequent stage than that in a prior stage. As a result, for example, solvent replacement efficiency can be improved, and the residual amount of a gel production solvent in the gel (e.g., DMSO) can be significantly reduced. Specifically, for example, the replacing a solvent is performed by three solvent replacement stages, and DMSO in a gel may be first replaced with water in the first solvent replacement stage, the water in the gel may then be replaced with IPA in the second solvent replacement stage, and the IPA in the gel may thereafter be replaced with isobutyl alcohol in the third solvent replacement stage.

The combination of the gelation solvent and the pulverization solvent is not limited to particular combinations, and examples thereof include the combinations of: DMSO and IPA; DMSO and ethanol; DMSO and isobutyl alcohol; and DMSO and n-butanol. By replacing the gelation solvent by the pulverization solvent as described above, it is possible to form a more uniform coating film in the formation of the coating film to be described below, for example.

The replacing a solvent is not particularly limited and can be performed as follows, for example. That is, first, the gel (e.g., gel after the aging treatment) produced in producing a gel is immersed in or brought into contact with another solvent to dissolve a gel production catalyst in the gel and an alcohol component and water generated by the condensation reaction in the solvent. The solvent in which the gel is immersed or with which the gel is brought into contact is drained, and the gel is again immersed or brought into contact with a new solvent. This is repeatedly performed until the residual amount of the gel production solvent in the gel becomes a desired amount. Each immersion time is, for example, 0.5 hours or more, 1 hour or more, or 1.5 hours or more. The upper limit thereof is not limited to particular times and is, for example, 10 hours or less. The immersion in the solvent may be performed by continuous contact of the solvent with the gel. The temperature during the immersion is not limited to particular temperatures and is, for example, from 20°C to 70°C, from 25°C to 65°C, or from 30°C to 60°C. By heating, the solvent is replaced promptly, and the amount of the solvent required for replacement can be reduced. However, the solvent may be simply replaced at room temperature. Further, for example, when the replacing a solvent is performed by multiple solvent replacement stages, each of the solvent replacement stages may be performed in the manner described above.

When the replacing a solvent is performed by multiple solvent replacement stages, and the hydrophilicity of "another solvent" is caused to be lower in a subsequent stage than that in a prior stage, such a solvent (replacement solvent) is not particularly limited. In the last solvent replacement stage, it is preferable that "another solvent" (replacement solvent) be a void-containing layer production solvent. Examples of the void-containing layer production solvent include a solvent having a boiling point of 140°C or lower. Examples of the void-containing layer production solvent include alcohol, ether, ketone, an ester solvent, an aliphatic hydrocarbon solvent, and an aromatic solvent. Specific examples of the alcohol having a boiling point of 140°C or lower include isopropyl alcohol (IPA), ethanol, methanol, n-butanol, 2-butanol, isobutyl alcohol (IBA), 1-pentanol, and 2-pentanol. Specific examples of the ether having a boiling point of 140°C

or lower include propylene glycol monomethyl ether (PGME), methyl cellosolve, and ethyl cellosolve. Specific examples of the ketone having a boiling point of 140°C or lower include acetone, methyl ethyl ketone, methyl isobutyl ketone, and cyclopentanone. Specific examples of the ester solvent having a boiling point of 140°C or lower include ethyl acetate, butyl acetate, isopropyl acetate, and normal propyl acetate. Specific examples of the aliphatic hydrocarbon solvent having a boiling point of 140°C or lower include hexane, cyclohexane, heptane, and octane. Specific examples of the aromatic solvent having a boiling point of 140°C or lower include toluene, benzene, xylene, and anisole. From the viewpoint of hardly eroding the base (e.g., resin film) during coating, the void-containing layer production solvent is preferably alcohol, ether, or an aliphatic hydrocarbon solvent. One type of the pulverization solvent may be used, or two or more types of the pulverization solvents may be used in combination. In particular, from the viewpoint of low volatility at room temperature, isopropyl alcohol (IPA), ethanol, n-butanol, 2-butanol, isobutyl alcohol (IBA), pentyl alcohol, propylene glycol monomethyl ether (PGME), methyl cellosolve, heptane, and octane are preferred. In particular, in order to prevent gel material particles (e.g., silica compounds) from scattering, it is preferable that the saturation vapor pressure (volatility) of the void-containing layer production solvent be not too high. As such a solvent, for example, the one containing an aliphatic group having three or four or more carbon atoms is preferable, and the one containing an aliphatic group having four or more carbon atoms is more preferable. The solvent containing an aliphatic group having three or four or more carbon atoms may be, for example, alcohol. Specifically, for such a solvent, isopropyl alcohol (IPA), isobutyl alcohol (IBA), n-butanol, 2-butanol, 1-pentanol, and 2-pentanol are preferable and isobutyl alcohol (IBA) is particularly preferable.

Another solvent (replacement solvent) in a stage other than the last solvent replacement stage is not particularly limited, and examples thereof include alcohol, ether, and ketone. Specific examples of alcohol include isopropyl alcohol (IPA), ethanol, methanol, n-butanol, 2-butanol, isobutyl alcohol (IBA), and pentyl alcohol. Specific examples of ether include propylene glycol monomethyl ether (PGME), methyl cellosolve, and ethyl cellosolve. A specific example of ketone is acetone. Another solvent (replacement solvent) is not limited as long as it can replace the gel production solvent or "another solvent" (replacement solvent) in a previous stage. Also, another solvent (replacement solvent) in a stage other than the last solvent replacement stage is preferably a solvent which does not finally remain in the gel or which hardly erodes the base (e.g., resin film) during coating even if it remains in the gel. From the viewpoint of hardly eroding the base (e.g., resin film) during coating, "another solvent" (replacement solvent) in a stage other than the last solvent replacement stage is preferably alcohol. Thus, in at least one of the multiple solvent replacement stages, "another solvent" is preferably alcohol.

In the first solvent replacement stage, "another solvent" may be, for example, water or a mixed solvent containing water in freely-selected proportion. Water or a mixed solvent containing water is highly compatible with a gel production solvent (e.g., DMSO) having a high hydrophilicity, so that the gel production solvent can be easily replaced and is preferable in terms of costs.

The multiple solvent replacement stages may include a stage in which "another solvent" is water, then a stage in which "another solvent" is the one containing an aliphatic group having three or less carbon atoms, and thereafter a stage in which "another solvent" is the one containing an aliphatic group having four or more carbon atoms. At least one of the solvent containing an aliphatic group having three or less carbon atoms and the solvent containing an aliphatic group having four or more carbon atoms may be an alcohol. The alcohol having an aliphatic group having three or less carbon atoms is not particularly limited, and examples thereof include isopropyl alcohol (IPA), ethanol, methanol, and n-propyl alcohol. The alcohol having an aliphatic group having four or more carbon atoms is not particularly limited, and examples thereof include n-butanol, 2-butanol, isobutyl alcohol (IBA), and pentyl alcohol. For example, the solvent containing an aliphatic group having three or less carbon atoms may be isopropyl alcohol, and the solvent containing an aliphatic group having four or more carbon atoms may be isobutyl alcohol.

The inventors of the present invention have found that it is very important to focus on the residual amount of the gel production solvent in order to form a void-containing layer having film strength under a relatively mild condition such as at 200°C or lower, for example. This finding, which has been found independently by the inventors of the present invention, is not described in the prior arts including the patent literature and the non-patent literature.

Although the reason (mechanism) why a void-containing layer having a low refractive index can be produced by reducing the residual amount of the gel production solvent in the gel is not necessarily clear, it is speculated as follows, for example. That is, as described above, the gel production solvent is preferably a high-boiling-point solvent (e.g., DMSO) or the like for the progress of gelation reactions. In production of a void-containing layer by coating and drying a sol solution prepared from the gel, it is difficult to completely remove the high-boiling-point solvent at a normal drying temperature and drying time (for example, 1 minute at 100°C, although it is not particularly limited thereto). This is because if the drying temperature is too high or the drying time is too long, problems such as deterioration of the base may arise. In addition, it is speculated that the high-boiling-point solvent remaining at the time of coating and drying enters between the gel pulverized products and slips the pulverized products, whereby the pulverized products are densely deposited. This may decrease the void fraction, so that low refractive index is hardly achieved. That is, conversely, it is speculated that such a phenomenon can be prevented, and low refractive index can be achieved by reducing the

residual amount of the high-boiling-point solvent. It is to be noted, however, that the above-described reasons (mechanisms) merely are examples based on the speculation and do not limit the present invention by any means.

In the present invention, the "solvent" (e.g., a gel production solvent, a void-containing layer production solvent, a replacement solvent) may not dissolve a gel or pulverized products thereof, and the gel or the pulverized products thereof may be dispersed or precipitated in the solvent.

As described above, the gel production solvent may have a boiling point of 140°C or higher, for example.

The gel production solvent is, for example, a water-soluble solvent. In the present invention, the "water-soluble solvent" refers to a solvent that can be mixed with water in a freely-selected ratio.

When the replacing a solvent is performed by multiple solvent replacement stages, the method is not particularly limited, and each of the solvent replacement stages can be performed, for example, as follows. That is, first, the gel is immersed in or brought into contact with "another solvent" to dissolve a gel production catalyst in the gel, an alcohol component generated by the condensation reaction, and water in "another solvent". Thereafter, the solvent in which the gel has been immersed or with which the gel has been brought into contact is drained, and the gel is again immersed or brought into contact with a new solvent. This is repeatedly performed until the residual amount of the gel production solvent in the gel becomes a desired amount. Each immersion time is, for example, 0.5 hours or more, 1 hour or more, or 1.5 hours or more. The upper limit thereof is not limited to particular times and is, for example, 10 hours or less. The immersion in the solvent may be performed by continuous contact of the solvent with the gel. The temperature during the immersion is not limited to particular temperatures and is, for example, from 20°C to 70°C, from 25°C to 65°C, or from 30°C to 60°C. By heating, the solvent is replaced promptly, and the amount of the solvent required for replacement can be reduced. However, the solvent may be simply replaced at room temperature. This solvent replacement stage is performed a plurality of times by gradually changing "another solvent" (replacement solvent) from the one having a high hydrophilicity to the one having a low hydrophilicity (a high hydrophobicity). In order to remove a highly hydrophilic gel production solvent (e.g., DMSO), for example, it is simple and efficient to first use water as a replacement solvent, as described above. After removing the DMSO or the like with water, the water in the gel is replaced with isopropyl alcohol and then with isobutyl alcohol (coating solvent) in this order, for example. That is, since water and isobutyl alcohol have low compatibility, the solvent replacement can be efficiently performed by once replacing with isopropyl alcohol and then with isobutyl alcohol, which is a coating solvent. However, this is an example, and, as described above, "another solvent" (replacement solvent) is not particularly limited.

In the gel production method of the present invention, for example, as described above, the solvent replacement stage may be performed a plurality of times by gradually changing "another solvent" (replacement solvent) from the one having a high hydrophilicity to the one having a low hydrophilicity (having a high hydrophobicity). This can significantly reduce the residual amount of the gel production solvent in the gel as described above. In addition, for example, it is possible to significantly reduce the amount of the solvent to be used and to reduce the cost, as compared with a case of performing the solvent replacement by one stage using only the coating solvent.

Moreover, after the replacing a solvent, pulverizing a gel in the pulverization solvent is performed. Furthermore, for example, as described above, the concentration of the gel may be measured, if necessary, after the replacing a solvent and prior to the pulverizing a gel, and adjusting a gel concentration may be performed thereafter if necessary. The concentration of the gel after the replacing a solvent and prior to the pulverizing a gel can be measured as follows, for example. That is, first, a gel is taken out from "another solvent" (pulverization solvent) after the replacing a solvent. This gel is controlled to be masses in appropriate shapes and sizes (e.g., blocks) by the controlling a gel form, for example. A solvent attached to the periphery of each mass of the gel is then removed, and the concentration of the solid content in one mass of the gel is measured by weight dry method. At that time, the concentration of the solid content in each of a plurality of randomly sampled masses (e.g., 6 masses) is measured, and variations of the measured concentrations from the mean value thereof are calculated, to determine reproducibility of the measured concentrations. In the adjusting the concentration, for example, the concentration of the gel in the gel-containing solution may be decreased by adding "another solvent" (pulverization solvent). Alternatively, in the adjusting a gel concentration, for example, the concentration of the gel in the gel-containing solution may be increased by evaporating "another solvent" (pulverization solvent).

In the gel pulverized product-containing solution production method of the present invention, for example, as described above, the pulverizing a gel may be performed by one stage but is preferably performed by multiple stages. Specifically, for example, the first pulverization stage and the second pulverization stage may be performed. In addition to the first pulverization stage and the second pulverization stage, a further pulverization stage may be performed as the pulverizing a gel. That is, in the gel pulverized product-containing solution production method of the present invention, the number of pulverization stages included in the pulverizing a gel is not limited to two and may be three or more.

In the manner as described above, a solution (e.g., a suspension) containing the microporous particles (pulverized products of a gelled compound) can be prepared. By further adding a catalyst for chemically bonding the microporous particles after or during the preparation of the solution containing the microporous particles, it is possible to prepare a solution containing the microporous particles and the catalyst. The amount of the catalyst to be added is not

particularly limited, and is, for example 0.01 to 20 wt%, 0.05 to 10 wt%, or 0.1 to 5 wt% relative to the weight of the pulverized products of the silicon compound. The catalyst may be, for example, a catalyst that promotes crosslinking of the microporous particles. The chemical reaction for chemically bonding the microporous particles to each other preferably is a reaction utilizing a dehydration condensation reaction of residual silanol groups contained in silica sol molecules. By promoting the reaction between the hydroxyl groups in the silanol groups by the catalyst, the void-containing structure can be cured in a short time, so that continuous film formation becomes possible. The catalyst may be a photoactive catalyst or a thermoactive catalyst, for example. With the use of the photoactive catalyst, in forming a void-containing layer, the microporous particles can be bonded (e.g., crosslinked) to each other without heating, for example. Accordingly, the shrinkage of the entire void-containing layer is less liable to occur in the forming a void-containing layer, so that it is possible to maintain a higher void fraction, for example. In addition to or instead of the catalyst, a substance that generates a catalyst (catalyst generator) may be used. For example, in addition to or instead of the photoactive catalyst, a substance that generates a catalyst when subjected to light irradiation (photocatalyst generator) may be used, and in addition to or instead of the thermoactive catalyst, a substance that generates a catalyst when heated (thermal catalyst generator) may be used. The photocatalyst generator is not particularly limited, and may be, for example, a photobase generator (a substance that generates a basic catalyst when subjected to light irradiation) or a photoacid generator (a substance that generates an acidic catalyst when subjected to light irradiation). Among them, the photobase generator is preferable. Examples of the photobase generator include 9-anthrylmethyl N,N-diethylcarbamate (product name: WPBG-018), (E)-1-[3-(2-hydroxyphenyl)-2-propenoyl]piperidine (product name: WPBG-027), 1-(anthraquinon-2-yl)ethyl imidazolecarboxylate (product name: WPBG-140), 2-nitrophenylmethyl 4-methacryloyloxypiperidine-1-carboxylate (product name: WPBG-165), 1,2-diisopropyl-3-[bis(dimethylamino) methylene]guanidium 2-(3-benzoylphenyl)propionate (product name: WPBG-266), 1,2-dicyclohexyl-4,4,5,5-tetramethylbiguanidium n-butyltriphenylborate (product name: WPBG-300), 2-(9-oxoxanthen-2-yl)propionic acid 1,5,7-triazabicyclo[4.4.0]dec-5-ene (Tokyo Kasei Kogyo Co., Ltd.), and a compound containing 4-piperidinemethanol (product name: HDPD-PB 100, manufactured by Heraeus). Note here that the above products with the product names including "WPBG" are all manufactured by Wako Pure Chemical Industries, Ltd. Examples of the photoacid generator include aromatic sulfonium salt (product name: SP-170, manufactured by ADEKA), triarylsulfonium salt (product name: CPI101A, manufactured by San-Apro Ltd.), and aromatic iodonium salt (product name: Irgacure 250, manufactured by Ciba Japan). The catalyst for chemically bonding the microporous particles to each other is not limited to the photoactive catalyst and the photocatalyst generator, and may be a thermoactive catalyst or a thermal catalyst generator, for example. Examples of the catalyst for chemically bonding the microporous particles to each other include: base catalysts such as potassium hydroxide, sodium hydroxide, and ammonium hydroxide; and acid catalysts such as a hydrochloric acid, an acetic acid, and an oxalic acid. Among them, the base catalysts are preferable. The catalyst or the catalyst generator for chemically bonding the microporous particles to each other can be used by adding it to a sol particle solution (e.g., suspension) containing the pulverized products (microporous particles) immediately before coating the sol particle solution, or can be used in the form of a mixture with a solvent, for example. The mixture may be, for example, a coating solution obtained by adding the catalyst directly to and dissolving the catalyst in the sol particle solution, a solution obtained by dissolving the catalyst or the catalyst generator in a solvent, or a dispersion liquid obtained by dispersing the catalyst or the catalyst generator in a solvent. The solvent is not particularly limited, and examples thereof include various organic solvents, water, and buffer solutions.

Furthermore, for example, after the solution containing the microporous particles is produced, by adding a small amount of a high-boiling-point solvent to the solution containing the microporous particles, the appearance of the film in film formation by coating can be improved. The amount of the high-boiling-point solvent is not particularly limited, and is, for example, 0.05 to 0.8 times, 0.1 to 0.5 times, and particularly 0.15 to 0.4 times relative to the solid content of the solution containing the microporous particles. The high-boiling-point solvent is not particularly limited and examples thereof include dimethyl sulfoxide (DMSO), N,N-dimethylformamide (DMF), N,N-dimethylacetamide (DMAc), N-methylpyrrolidone (NMP), γ-butyl lactone (GBL), and ethylene glycol ethyl ether (EGEE). In particular, a solvent having a boiling point of 110°C or higher is preferable, and the present invention is not limited to the specific examples described above. It is considered that the high-boiling-point solvent serves as a leveling agent in film forming in which particles are aligned. It is preferable to use the above-described high-boiling-point solvent also in the gel synthesis. It is to be noted, although details are unknown, the high-boiling-point solvent effectively acts when the high-boiling-point solvent is newly added to the solution containing the microporous particles produced after the solvent used in the synthesis has been completely removed. It is to be noted, however, that the above-described mechanisms merely are examples and do not limit the present invention by any means.

Then, nanoparticles, surfaces of which being modified with the compound having the surface orientation, are added to the produced gel pulverized product-containing solution, and the resultant gel pulverized product-containing solution can be used for producing the void-containing layer of the present invention. At this time, for example, as described above, the nanoparticles may be added at a proportion of, for example, 10 to 50 mass%, 15 to 40 mass%, or 20 to 30 mass% relative to a skeleton component of the void-containing layer.

[5-3. Void-containing layer production method, laminate production method, and pressure-sensitive adhesive/adhesive layer production method]

The laminate production method of the present invention is described together with the methods of producing the void-containing layer and pressure-sensitive adhesive/adhesive layer that configure the laminate, with reference to examples. The methods will be described below mainly with reference to a case in which the void-containing layer of the present invention is a silicone porous material formed of a silicon compound. The void-containing layer of the present invention, however, is not limited only to a silicone porous material. Regarding the case in which the void-containing layer is other than a silicone-porous material, reference can be made to the following description unless otherwise stated. Further, in the following description, the gel pulverized product-containing solution used for producing the void-containing layer of the present invention contains nanoparticles, surfaces of which being modified with the compound having the surface orientation, unless otherwise stated. As described above, the nanoparticles, surfaces of which being modified with the compound having the surface orientation, can be added to the gel pulverized product-containing solution after being produced, for example.

The void-containing layer production method of the present invention includes, for example, forming a void-containing layer precursor using the gel pulverized product-containing solution of the present invention, and chemically bonding the pulverized products of the gel pulverized product-containing solution contained in the precursor. The precursor may be referred to as a coating film, for example.

According to the void-containing layer production method of the present invention, for example, a porous structure having the same function as an air layer is formed. The reason for this is speculated as follows, for example. The present invention, however, is not limited by this speculation. The reason will be described below with reference to a case in which the void-containing layer is a silicone porous material.

The gel pulverized product-containing solution used in the method for producing the silicone porous material contains pulverized products of the silicon compound gel. Thus, the three-dimensional structure of the gelled silica compound is dispersed in three-dimensional basic structures of the pulverized products. Thus, in the method for producing the silicone porous material, when the precursor (e.g., coating film) is formed using the gel pulverized product-containing solution, the three-dimensional basic structures are deposited, and the void-containing structure based on the three-dimensional basic structures are formed, for example. That is, according to the method for producing a silicone porous material, a new porous structure different from that of the silicon compound gel is formed of the pulverized products having the three-dimensional basic structures. Moreover, in the method for producing a silicone porous material, the pulverized products are further chemically bonded to each other, whereby the new three-dimensional structure is immobilized. Thus, even though the silicone porous material to be obtained by the method for producing the silicone porous material has a structure with void spaces, it can maintain sufficient strength and sufficient flexibility. The void-containing layer (e.g., silicone porous material) obtained by the present invention can be used as a member utilizing voids in a wide range of products such as heat insulating materials, sound absorbing materials, optical members, and ink-receiving layers, for example. Furthermore, a laminated film having various functions imparted therein can be produced using the void-containing layer.

Regarding the void-containing layer production method of the present invention, reference can be made to the description as to the gel pulverized product-containing solution of the present invention unless otherwise stated.

In forming a porous material precursor, the gel pulverized product-containing solution of the present invention is coated on the base, for example. By coating the gel pulverized product-containing solution of the present invention onto, for example, a base, drying the coating film, and thereafter chemically bonding (e.g., crosslinking) pulverized products in the bonding, for example, a void-containing layer having film strength at or above a certain level can be formed continuously.

The amount of the gel pulverized product-containing solution to be coated onto the base is not particularly limited, and can be set as appropriate depending on, for example, a desired thickness of the void-containing layer of the present invention. As a specific example, when the silicone porous material having a thickness from 0.1 μm to 1000 μm is to be formed, the amount of the pulverized products to be coated onto the base is, for example, in the range from 0.01 to 60000 μg, 0.1 to 5000 μg, or 1 to 50 μg per square meter of the base. It is difficult to uniquely define a preferable amount of the gel pulverized product-containing solution to be coated, because it may be affected by the concentration of the solution, the coating method, etc., for example. However, in terms of productivity, it is preferable to make a coating layer as thin as possible. When the coating amount is too large, for example, it is likely that the solvent may be dried in a drying oven before it volatilizes. If the solvent is dried before the void-containing structure is formed by the sedimentation and deposition of nano-sized pulverized sol particles in the solvent, formation of void spaces may be inhibited to lower the void fraction considerably. On the other hand, when the coating amount is too small, the risk of cissing due to unevenness, variation in hydrophilicity and hydrophobicity, etc. on the surface of the base may increase.

After the gel pulverized product-containing solution is coated on the base, the porous material precursor (coating film) may be subjected to a drying treatment. The purpose of the drying treatment is not only to remove the solvent in

the porous material precursor (the solvent contained in the gel pulverized product-containing solution) but also to allow the sedimentation and deposition of the sol particles to occur to form a void-containing structure during the drying treatment, for example. The temperature of the drying treatment is from 50°C to 250°C, from 60°C to 150°C, or from 70°C to 130°C, for example, and the time of the drying treatment is from 0.1 to 30 minutes, from 0.2 to 10 minutes, or from 0.3 to 3 minutes, for example. In terms of continuous productivity and realization of high void fraction, it is preferable to set the temperature and the time of the drying treatment lower and shorter, respectively, for example. If the conditions are too stringent, the following problem may arise, for example. That is, when the base is a resin film, for example, the base may extend in a drying oven as the temperature approaches the glass-transition temperature of the base, so that a void-containing structure formed immediately after the coating may have defects such as cracks. On the other hand, when the conditions are too mild, the following problem may arise, for example. That is, the film may contain a residual solvent when it comes out of the drying oven, so that, if the film rubs against a roller in a subsequent process, defects in appearance such as scratches may be caused.

The drying treatment may be natural drying, heat-drying, or drying under reduced pressure, for example. The drying method is not particularly limited, and a commonly used heater can be used, for example. Examples of the heater include a hot air fan, a heating roller, and a far-infrared heater. In particular, from the viewpoint of performing continuous production industrially, heat-drying is preferable. It is preferable to use a solvent having a low surface tension for the purpose of inhibiting the shrinkage stress that may occur as the solvent volatizes during the drying process and inhibiting a crack phenomenon in the void-containing layer (the silicone porous material) caused by the shrinkage stress. Examples of the solvent include, but are not limited to, lower alcohols (typically, isopropyl alcohol [IPA]), hexane, and perfluorohexane.

The base is not limited to particular bases, and for example, a base made of a thermoplastic resin, a base made of glass, an inorganic base plate typified by silicon, a plastic formed of a thermosetting resin, an element such as a semiconductor, or a carbon fiber-based material typified by carbon nanotube can be favorably used. The base, however, is by no means limited thereto. Examples of the form of the base include a film and a plate. Examples of the thermoplastic resin include polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP).

In the void-containing layer production method of the present, the bonding is chemically bonding the pulverized products contained in the porous material precursor (coating film). By the bonding, the three-dimensional structures of the pulverized products in the porous material precursor are immobilized, for example. In the case of conventional immobilization by sintering, for example, a treatment at a high temperature of at least 200°C is performed to induce the dehydration condensation reaction of silanol groups and the formation of siloxane bonds. In the bonding of the present invention, various additives that catalyze the above-described dehydration condensation reaction are caused to react with each other. With this configuration, for example, when the base is a resin film, it is possible to continuously form and immobilize the void-containing structure at a relatively low drying temperature of around 100°C and with a short treatment time of less than several minutes without damaging the base.

The method for achieving the above-described chemical bonding is not particularly limited, and can be determined as appropriate depending on the type of the gel (e.g. silicon compound gel), for example. As a specific example, the chemical bonding can be achieved by chemically crosslinking the pulverized products. Besides this, for example, when inorganic particles such as titanium oxide particles are added to the pulverized products, the inorganic particles and the pulverized products may be chemically bonded by crosslinking. Furthermore, in the case of causing the pulverized products to carry a biocatalyst such as an enzyme, a site of the catalyst other than the catalytic site may be chemically crosslinked with the pulverized products. Therefore, the present invention is not only applicable to a void-containing layer formed by sol particles bonded to each other, but the applicable range of the present invention can be expanded to an organic-inorganic hybrid void-containing layer and a host-guest void-containing layer, for example. It is to be noted, however, that the applicable range of the present invention is not limited thereto.

Depending on the type of the gel (e.g. silicon compound gel) pulverized product, the bonding can be carried out by causing a chemical reaction in the presence of a catalyst, for example. The chemical reaction in the present invention preferably is a reaction utilizing a dehydration condensation reaction of residual silanol groups contained in the pulverized products of the silicon compound gel. By promoting the reaction between the hydroxyl groups in the silanol groups by the catalyst, the void-containing structure can be cured in a short time, so that continuous film formation becomes possible. Examples of the catalyst include, but are not limited to, base catalysts such as potassium hydroxide, sodium hydroxide, and ammonium hydroxide and acid catalysts such as a hydrochloric acid, an acetic acid, and an oxalic acid. As a catalyst to be used in the dehydration condensation reaction, a base catalyst is particularly preferable. Also, catalysts that exhibit catalytic activity when irradiated with light (e.g., ultraviolet rays), such as photoacid generation catalysts and photobase generation catalysts can be used preferably. The photoacid generation catalysts and photobase generation catalysts are not particularly limited, and are as described above, for example. For example, it is preferable to add the catalyst to a sol particle solution containing the pulverized products immediately before coating the sol particle solution as described above, or to use the catalyst in the form of a mixture with a solvent, for example. The mixture may

be, for example, a coating solution obtained by adding the catalyst directly to and dissolving the catalyst in the sol particle solution, a solution obtained by dissolving the catalyst in a solvent, or a dispersion liquid obtained by dispersing the catalyst in a solvent. The solvent is not particularly limited, and examples thereof include water and buffer solutions, as described above.

Furthermore, for example, a crosslinking assisting agent for indirectly bonding the pulverized products of the gel may be further added to the gel-containing solution of the present invention. This crosslinking assisting agent enters the spaces between the respective particles (the pulverized products), where it interacts with or bonds to the particles. This allows the particles somewhat apart from each other to bond to each other. As a result, it becomes possible to efficiently improve the strength. The crosslinking assisting agent preferably is a multi-crosslinking silane monomer. Specifically, the multi-crosslinking silane monomer may have at least two and at most three alkoxysilyl groups, the chain length between the alkoxysilyl groups may be at least one and at most ten carbon atoms, and the multi-crosslinking silane monomer may contain an element other than carbon, for example. Examples of the crosslinking assisting agent include bis(trimethoxysilyl)ethane, bis(triethoxysilyl)ethane, bis(trimethoxysilyl)methane, bis(triethoxysilyl)methane, bis(triethoxysilyl)propane, bis(trimethoxysilyl)propane, bis(triethoxysilyl)butane, bis(trimethoxysilyl)butane, bis(triethoxysilyl)pentane, bis(trimethoxysilyl)pentane, bis(triethoxysilyl)hexane, bis(trimethoxysilyl)hexane, bis(trimethoxysilyl)-N-butyl-N-propyl-ethane-1,2-diamine, tris-(3-trimethoxysilylpropyl)isocyanurate, and tris-(3-triethoxysilylpropyl)isocyanurate. The amount of the crosslinking assisting agent to be added is not particularly limited, and is, for example, in the range from 0.01 wt% to 20 wt%, from 0.05 wt% to 15 wt%, or from 0.1 wt% to 10 wt% relative to the weight of the pulverized products of the silicon compound.

The chemical reaction in the presence of the catalyst can be caused by, for example: subjecting the coating film containing the catalyst or the catalyst generator previously added to the gel pulverized product-containing solution to light irradiation or heating; subjecting the coating film to light irradiation or heating after spraying the catalyst over the coating film; or subjecting the coating film to light irradiation or heating while spraying the catalyst or the catalyst generator over the coating film. When the catalyst is a photoactive catalyst, the silicone porous material can be formed by chemically bonding the microporous particles to each other by light irradiation. When the catalyst is a thermoactive catalyst, the silicone porous material can be formed by chemically bonding the microporous particles to each other by heating. The irradiation dose (energy) in the above irradiation is not limited to particular amounts and is, for example, from 200 to 800 $mJ/cm^2$, from 250 to 600 $mJ/cm^2$, or from 300 to 400 $mJ/cm^2$, in terms of light at a wavelength of 360 nm. The accumulated amount of light preferably is 200 $mJ/cm^2$ or more, from the viewpoint of preventing the problem in that, owing to insufficient irradiation dose, degradation of the catalyst generator by light absorption may not proceed sufficiently, so that the catalyst generator cannot exhibit its effect sufficiently. The accumulated amount of light preferably is 800 $mJ/cm^2$ or less, from the viewpoint of preventing damage to the base disposed under the void-containing layer so as to prevent the formation of heat wrinkles. The wavelength of light in the irradiation is not limited to particular wavelengths and is, for example, from 200 to 500 nm or from 300 to 450 nm. The irradiation time in the irradiation is not limited to particular times and is, for example, from 0.1 to 30 minutes, from 0.2 to 10 minutes, or from 0.3 to 3 minutes. The conditions for the heat treatment are not limited to particular conditions. The heating temperature is from 50°C to 250°C, from 60°C to 150°C, or from 70°C to 130°C, for example, and the heating time is from 0.1 to 30 minutes, from 0.2 to 10 minutes, or from 0.3 to 3 minutes, for example. It is preferable to use, for example, a solvent having a low surface tension for the purpose of inhibiting the shrinkage stress that may occur as the solvent volatizes during the drying process and inhibiting a crack phenomenon in the void-containing layer caused by the shrinkage stress. Examples of the solvent include, but are not limited to, lower alcohols typically, isopropyl alcohol (IPA), hexane, and perfluorohexane.

The void-containing layer (e.g., silicone porous material) of the present invention can be produced in the above-described manner. The void-containing layer production method of the present invention, however, is not limited thereto. The void-containing layer of the present invention, which is a silicone porous material, may be referred to as a "silicone porous material of the present invention" in the description below.

The laminate production method of the present invention includes, for example, producing the pressure-sensitive adhesive/adhesive layer of the present invention by the pressure-sensitive adhesive/adhesive layer production method of the present invention; and attaching the pressure-sensitive adhesive/adhesive layer to the void-containing layer. As described above, the pressure-sensitive adhesive/adhesive layer production method of the present invention includes, for example, coating the pressure-sensitive adhesive/adhesive coating solution of the present invention onto a base, and heat-drying the base coated with the pressure-sensitive adhesive/adhesive coating solution. For example, the pressure-sensitive adhesive/adhesive layer may be formed on the void-containing layer of the present invention by attaching, e.g., an adhesive tape including a base and the pressure-sensitive adhesive/adhesive layer of the present invention laminated on the base to the void-containing layer with the pressure-sensitive adhesive/adhesive layer side of the adhesive tape facing the void-containing layer. In this case, the base of the adhesive tape may be left on or peeled off from the pressure-sensitive adhesive/adhesive layer. In particular, as described above, by peeling the base to form a (baseless) void-containing layer-containing pressure-sensitive adhesive/adhesive sheet having no base, the thickness of the sheet can be significantly reduced and the increase in the thickness of the device or the like can be prevented.

In the present invention, the terms "pressure-sensitive adhesive" and "pressure-sensitive adhesive layer" respectively refer to an agent and a layer that adhere a substance in a peelable manner, for example. In the present invention, the terms "adhesive" and "adhesive layer" respectively refer to an agent and a layer that adhere a substance in a non-peelable manner, for example. It is to be noted, however, that, in the present invention, the "pressure-sensitive adhesive" and the "adhesive" are not always clearly distinguishable from each other, and also, the "pressure-sensitive adhesive layer" and the "adhesive layer" are not always clearly distinguishable from each other. In the present invention, the pressure-sensitive adhesive/adhesive layer of the present invention can be produced using the pressure-sensitive adhesive/adhesive coating solution of the present invention as described above. As described above, the pressure-sensitive adhesive/adhesive coating solution of the present invention can be produced by the method for producing the pressure-sensitive adhesive/adhesive coating solution of the present invention including mixing a (meth)acrylic polymer, a monomer having one or two reactive double bonds per molecule, an isocyanate-based crosslinking agent, and an organic peroxide.

The producing the pressure-sensitive adhesive/adhesive layer can be performed, for example, as follows. First, as described above, the pressure-sensitive adhesive/adhesive coating solution of the present invention is produced by the mixing a (meth)acrylic polymer, a monomer having one or two reactive double bonds per molecule, an isocyanate-based crosslinking agent, and an organic peroxide. In this case, when the pressure-sensitive adhesive/adhesive coating solution includes a component(s) other than the (meth)acrylic polymer, a monomer having one or two reactive double bonds per molecule, the isocyanate-based crosslinking agent, and the organic peroxide, such a component(s) may be mixed together. For example, the polymerization solvent at the time of producing the (meth)acrylic polymer may not be removed and mixed as a component of the pressure-sensitive adhesive/adhesive coating solution of the present invention. The method for producing the pressure-sensitive adhesive/adhesive coating solution of the present invention may or may not include a process other than the mixing, and may simply mix all the components of the pressure-sensitive adhesive/adhesive coating solution of the present invention in the mixing.

Next, the pressure-sensitive adhesive/adhesive coating solution of the present invention is coated onto a base (coating pressure-sensitive adhesive/adhesive coating solution). The base is not particularly limited, and may be, for example, a base such as a film. The base is not limited to particular bases, and for example, a base made of a thermoplastic resin, a base made of glass, an inorganic base plate typified by silicon, a plastic formed of a thermosetting resin, an element such as a semiconductor, or a carbon fiber-based material typified by carbon nanotube can be favorably used. The base, however, is by no means limited thereto. Examples of the form of the base include a film and a plate. Examples of the thermoplastic resin includes polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP). In the coating the pressure-sensitive adhesive/adhesive coating solution, the coating thickness of the pressure-sensitive adhesive/adhesive coating solution is not particularly limited, but may be appropriately adjusted so that, for example, the thickness of the dried pressure-sensitive adhesive/adhesive layer becomes a predetermined thickness. The thickness of the dried pressure-sensitive adhesive/adhesive layer is not particularly limited, and is, for example, as described below.

Next, the base coated with the pressure-sensitive adhesive/adhesive coating solution is heated and dried (heat-drying). In the heat-drying, the temperature is not particularly limited, and may be, for example, 50°C or higher, 80°C or higher, 100°C or higher, or 155°C or higher, and may be, for example, 200°C or lower, 180°C or lower, or 160°C or lower. The time of heat-drying may be, for example, 1 minute or longer, 2 minutes or longer, or 3 minutes or longer, and for example, 60 minutes or shorter, 30 minutes or shorter, 20 minutes or shorter, or 10 minutes or shorter. In the heat-drying, for example, a crosslinking reaction and a graft polymerization occur among the (meth)acrylic polymer, a monomer having one or two reactive double bonds per molecule, and the isocyanate-based crosslinking agent. Thus, for example, as described above, the amount of the semi-polymer present in the pressure-sensitive adhesive/adhesive coating solution is reduced, and the pressure-sensitive adhesive/adhesive layer is less liable to penetrate into the voids of the void-containing layer. In the manner as described above, the pressure-sensitive adhesive/adhesive layer of the present invention can be produced.

Next, the pressure-sensitive adhesive/adhesive layer is attached to the void-containing layer (attaching). Although this method is not particularly limited, for example, as described above, the pressure-sensitive adhesive/adhesive layer may be formed on the void-containing layer of the present invention by attaching, e.g., an adhesive tape including a base and the pressure-sensitive adhesive/adhesive layer of the present invention laminated on the base to the void-containing layer with the pressure-sensitive adhesive/adhesive layer side of the adhesive tape facing the void-containing layer.

The laminate production method of the present invention may further include, for example, heating the pressure-sensitive adhesive/adhesive layer and the void-containing layer after the attaching. Hereinafter, the heating may be referred to as "aging". In the heating (aging), the heating temperature is not particularly limited, and may be, for example, 40°C or higher, 45°C or higher, or 50°C or higher, and may be, for example, 80°C or lower, 70°C or lower, 60°C or lower, or 55°C or lower. The heating time may be, for example, 1 minute or longer, 10 minutes or longer, 60 minutes or longer,

or 1800 minutes or longer, and may be, for example, 3000 minutes or shorter, 2800 minutes or shorter, 2500 minutes or shorter, or 2000 minutes or shorter. In the aging, for example, the intermediate layer is formed by uniting the void-containing layer and the pressure-sensitive adhesive/adhesive layer. Then, for example, as described above, the intermediate layer serves as a stopper, which makes it possible to suppress a reduction in the void fraction caused by filling the voids of the void-containing layer with the pressure-sensitive adhesive.

The void-containing layer can be protected from physical damage (particularly abrasion) by the pressure-sensitive adhesive/adhesive layer. It is preferable that the pressure-sensitive adhesive/adhesive layer have excellent pressure resistance so that the void-containing layer does not collapse even when used as a (baseless) void-containing layer-containing pressure-sensitive adhesive/adhesive sheet having no base, however, is not limited thereto. The thickness of the pressure-sensitive adhesive/adhesive layer is not particularly limited, and is, for example, from 0.1 to 100 μμm, from 5 to 50 μμm, from 10 to 30 μμm, or from 12 to 25 μμm.

The void-containing layer of the present invention obtained in this manner may be further laminated on another film (layer) to form a laminated structure including the porous structure, for example. In this case, the respective components of the laminated structure may be laminated through the pressure-sensitive adhesive/adhesive layer (pressure-sensitive adhesive or adhesive), for example.

The respective components may be laminated by continuous processing using a long film (e.g., the so-called "roll-to-roll" process) in terms of efficiency, for example. When the base is a molded product, an element, or the like, the components that have been subjected to batch processing may be laminated on the base.

Regarding the method for forming the laminate of the present invention on a base (resin film), continuous processing processes will be described below with reference to illustrative examples shown in FIGs. 1 to 3. FIG. 2 shows, after the film formation of the void-containing layer (silicone porous material), a protective film is attached to the thus-formed film and the thus-obtained laminate is wound up. However, in the case where the void-containing layer is laminated on another functional film, this may be achieved in the above-described manner, or alternatively, in the following manner: after performing coating and drying for forming the functional film, the void-containing layer formed into a film is attached to the functional film immediately before being wound-up. It should be noted that the film forming processes shown in FIGs. 1 to 3 are merely illustrative and do not limit the present invention by any means.

The base may be the resin film described above. In this case, the void-containing layer of the present invention is obtained by forming the void-containing layer on the base. The void-containing layer of the present invention also is obtained by forming the void-containing layer on the base and then laminating the void-containing layer on the resin film described above in connection with the void-containing layer of the present invention.

The cross-sectional view of FIG. 1 schematically shows an example of a process of the laminate production method of the present invention in which the void-containing layer, the intermediate layer, and the pressure-sensitive adhesive/adhesive layer are laminated in this order on the base (resin film). In FIG. 1, the method for forming the void-containing layer includes coating (1) of coating a sol particle solution 20" of pulverized products of a gelled compound onto a base (resin film) 10 to form a coating film, drying (2) of drying the sol particle solution 20" to form a dried coating film 20', chemical treating (for example, crosslinking) (3) of subjecting the coating film 20' to a chemical treatment (for example, crosslinking treatment) to form a void-containing layer 20, attaching (4) of attaching a pressure-sensitive adhesive/adhesive layer 30 to the void-containing layer 20, and forming an intermediate layer (5) of reacting the void-containing layer 20 with the pressure-sensitive adhesive/adhesive layer 30 to form an intermediate layer 22. Although it is not shown, the laminate production method of the present invention includes, as described above, producing the pressure-sensitive adhesive/adhesive layer by the pressure-sensitive adhesive/adhesive layer production method of the present invention, and attaching the pressure-sensitive adhesive/adhesive layer to the void-containing layer. As described above, the pressure-sensitive adhesive/adhesive layer production method of the present invention includes coating the pressure-sensitive adhesive/adhesive coating solution of the present invention onto a base, and heat-drying the base coated with the pressure-sensitive adhesive/adhesive coating solution. The chemical treating (crosslinking) (3) corresponds to the "forming a void-containing layer" of forming a void-containing layer in the laminate of the present invention, and the forming an intermediate layer (5) corresponds to the above-described heating (aging). In FIG. 1, the forming an intermediate layer (5) (hereinafter sometimes referred to as "aging") also serves as improving the strength of the void-containing layer 20 (crosslinking-reacting for causing a crosslinking reaction inside the void-containing layer 20), and after the forming an intermediate layer (5), the void-containing layer 20 is changed to a void-containing layer 21 having improved strength. The present invention, however, is not limited thereto, and for example, the void-containing layer 20 may not be changed after the forming an intermediate layer (5). Further, as described above, the attaching (4) may be attaching of an adhesive tape having a pressure-sensitive adhesive/adhesive layer to a base. In FIG. 1, for example, although the base coated with the pressure-sensitive adhesive/adhesive coating solution (the base on which the pressure-sensitive adhesive/adhesive layer is formed) is not shown, the base may be peeled off from or left on the pressure-sensitive adhesive/adhesive layer 30. Through the above processes (1) to (5), as shown in FIG. 1, a laminated film in which the void-containing layer 21, the intermediate layer 22, and the pressure-sensitive adhesive/adhesive layer 30 are laminated in this order on the resin film 10 can be produced. The forming an intermediate layer (5), however, is not

always necessary, and the produced laminate of the present invention may not include the intermediate layer. Furthermore, the laminate production method of the present invention may or may not appropriately include processes other than those described with reference to FIG. 1.

In the coating (1), the method for coating the sol particle solution 20" is not particularly limited, and a commonly used coating method can be employed. Examples of the coating method include a slot die method, a reverse gravure coating method, a micro-gravure method (micro-gravure coating method), a dip method (dip coating method), a spin coating method, a brush coating method, a roller coating method, a flexography, a wire-bar coating method, a spray coating method, an extrusion coating method, a curtain coating method, and a reverse coating method. Among them, from the viewpoint of productivity, smoothness of a coating film, etc., the extrusion coating method, the curtain coating method, the roller coating method, and the micro-gravure coating method are preferable. The coating amount of the sol particle solution 20" is not particularly limited, and can be set as appropriate so that the void-containing layer 20 having a suitable thickness is obtained, for example. The thickness of the void-containing layer 21 is not particularly limited, and is as described above, for example.

In the drying (2), the sol particle solution 20" is dried (i.e., a dispersion medium contained in the sol particle solution 20" is removed) to form the coating film after drying (void-containing layer precursor) 20'. The conditions for the drying treatment are not particularly limited, and may be as described above.

In the chemical treating (3), the coating film 20' containing a catalyst or the catalyst generator (e.g., a photoactive catalyst, a photocatalyst generator, a thermoactive catalyst, or a thermal catalyst generator) added prior to the coating is irradiated with light or heated, whereby the pulverized products in the coating film 20' are chemically bonded (e.g., crosslinked) to each other. As a result, the void-containing layer 20 is formed. The conditions for the light irradiation and heating in the chemical treating (3) are not particularly limited, and may be as described above.

On the other hand, although it is not shown, the pressure-sensitive adhesive/adhesive layer of the present invention is separately produced by the producing the pressure-sensitive adhesive/adhesive layer. The producing the pressure-sensitive adhesive/adhesive layer (the pressure-sensitive adhesive/adhesive layer production method of the present invention) is as described above, for example.

Further, the attaching (4) and forming an intermediate layer (5) are performed. As described above, the forming an intermediate layer (5) is heating the pressure-sensitive adhesive/adhesive layer 30 and the void-containing layer 20 after the attaching (4). For example, when the pressure-sensitive adhesive is a pressure-sensitive adhesive composition containing a polymer (for example, a (meth)acrylic polymer) and a crosslinking agent, the polymer may be crosslinked by the crosslinking agent by the heating. The heating may also serve, for example, as drying the pressure-sensitive adhesive. Further, for example, the heating may also serve as the forming an intermediate layer (5). The temperature in the heating is not particularly limited, and is, for example, 70 to 160°C, 80 to 155°C, or 90 to 150°C. The time of the heating is not particularly limited, and is, for example, 1 to 10 minutes, 1 to 7 minutes, or 2 to 5 minutes.

FIG. 2 schematically shows an example of a slot die coating apparatus and the method for forming a void-containing layer using the same. While FIG. 2 is a sectional view, hatching is omitted for the sake of clarity.

As shown in FIG. 2, the respective processes in the method using this apparatus are performed while conveying a base 10 in one direction by rollers. The conveyance speed is not particularly limited, and is, for example, from 1 to 100 m/min, from 3 to 50 m/min, or from 5 to 30 m/min.

First, while feeding and conveying the base 10 from a delivery roller 101, coating (1) of coating a sol particle solution 20" onto the base 10 is performed on a coating roller 102. Subsequently, drying (2) is performed in an oven zone 110. In the coating apparatus shown in FIG. 2, a pre-drying is performed after the coating (1) and prior to the drying (2). The pre-drying can be performed at room temperature without heating. In the drying (2), heaters 111 are used. As the heater 111, a hot air fan, a heating roll, a far-infrared heater, or the like can be used as appropriate, as described above. Also, for example, the drying (2) may be divided into two or more processes, and the drying temperatures in the respective processes may be set so that the drying temperature increases as it proceeds to the later process.

After the drying (2), chemical treating (3) is performed in a chemical treatment zone 120. In the chemical treating (3), when a coating film 20' after being dried contains a photoactive catalyst, for example, the coating film 20' is irradiated with light emitted from lamps (light irradiators) 121 disposed above and below the base 10. On the other hand, when the coating film 20' after being dried contains a thermoactive catalyst, for example, hot air fans (heaters) are used instead of the lamps (light irradiators) 121, and the base 10 is heated using the hot air fans 121 disposed above and below the base 10. By this crosslinking treatment, pulverized products in the coating film 20' are chemically bonded to each other, whereby a void-containing layer 20 is cured and strengthened. Although the chemical treating (3) is performed after the drying (2) in the present example, the timing at which chemical bonding of the pulverized products is caused in the production method of the present invention is not particularly limited, as described above. For example, as described above, the drying (2) may also serve as the chemical treating (3). Further, even in the case where the chemical bonding has occurred in the drying (2), the chemical treating (3) further may be performed to make the chemical bonds between the pulverized products still stronger. Furthermore, the chemical bonding of the pulverized products may occur in the processes (e.g., the pre-drying, the coating (1), and preparing the coating solution) prior to the drying (2).

After the chemical treating (3), attaching (4) of attaching a pressure-sensitive adhesive/adhesive layer 30 to the void-containing layer 20 is performed in a pressure-sensitive adhesive/adhesive layer coating zone 130a by an attacher 131a. The attaching (4) may be, for example, attaching (adhering) of an adhesive tape including a base and the pressure-sensitive adhesive/adhesive layer 30 to the base as described above. Although it is not shown in the drawings, the base may be peeled off from or left on the pressure-sensitive adhesive/adhesive layer 30, for example, as described above.

Further, forming an intermediate layer (aging) (5) is performed in an intermediate layer forming zone (aging zone) 130 to form an intermediate layer 22 by reacting the void-containing layer 20 with the pressure-sensitive adhesive/adhesive layer 30. In this process, the void-containing layer 20 undergoes an internal crosslinking reaction and turns into a void-containing layer 21 with improved strength, as described above. The forming an intermediate layer (aging) (5) may be performed, for example, by heating the void-containing layer 20 and the pressure-sensitive adhesive/adhesive layer 30 using hot air fans (heaters) 131 disposed above and below the base 10. The heating temperature, time, and the like are not particularly limited, and are, for example, as described above.

Then, after the forming an intermediate layer (aging) (5), a laminate obtained by forming the void-containing layer 21 on the base 10 is wound up by the winding roller 105. In FIG. 2, the void-containing layer 21 in the laminate is protected by being covered with a protective sheet fed by a roller 106. Instead of the protective sheet, another layer formed of a long film may be laminated on the void-containing layer 21.

FIG. 3 schematically shows an example of a coating apparatus for a micro-gravure method (micro-gravure coating method) and the method for forming a void-containing layer using the same. While FIG. 3 is a sectional view, hatching is omitted for the sake of clarity.

As shown in FIG. 3, the respective processes in the method using this apparatus are performed while conveying a base 10 in one direction by rollers, as in the example shown in FIG. 2. The conveyance speed is not particularly limited, and is, for example, from 1 to 100 m/min, from 3 to 50 m/min, or from 5 to 30 m/min.

First, while feeding and conveying the base 10 from a delivery roller 201, coating (1) of coating a sol particle solution 20" of the present invention onto the base 10 is performed. As shown in FIG. 3, the sol particle solution 20" is coated using a solution reservoir 202, a doctor (doctor knife) 203, and a micro-gravure coater 204. Specifically, the sol particle solution 20" in the solution reservoir 202 is caused to be carried on the surface of the micro-gravure coater 204, and is then coated on the surface of the base 10 with the micro-gravure coater 204 while controlling the thickness of the coating film of the sol particle solution 20" to a predetermined thickness with the doctor 203. It is to be noted here that the micro-gravure coater 204 merely is an example of a coater. The coater is not limited to the micro-gravure coater 204, and any coater may be employed.

Next, drying (2) is performed. Specifically, as shown in FIG. 3, the base 10 having the sol particle solution 20" coated thereon is conveyed to an oven zone 210. The sol particle solution 20" is dried by being heated with heaters 211 disposed in the oven zone 210. The heaters 211 may be the same as those in FIG. 2, for example. The drying (2) may be divided into two or more processes by dividing the oven zone 210 into two or more sections, for example. The drying temperatures in the respective processes may be set so that the drying temperature increases as it proceeds to the later process. After the drying (2), chemical treating (3) is performed in a chemical treatment zone 220. In the chemical treating (3), when a coating film 20' after being dried contains a photoactive catalyst, for example, the coating film 20' is irradiated with light emitted from lamps (light irradiators) 221 disposed above and below the base 10. On the other hand, when the coating film 20' after being dried contains a thermoactive catalyst, for example, hot air fans (heaters) are used instead of the lamps (light irradiators) 221, and the base 10 is heated using the hot air fans 221 disposed below the base 10. By this crosslinking treatment, pulverized products in the coating film 20' are chemically bonded to each other, whereby a void-containing layer 20 is formed.

After the chemical treating (3), attaching (4) of attaching the pressure-sensitive adhesive/adhesive layer 30 to the void-containing layer 20 in a pressure-sensitive adhesive/adhesive layer coating zone 230a by an attacher 231a. The attaching (4) may be, for example, attaching (adhering) of an adhesive tape including a base and the pressure-sensitive adhesive/adhesive layer 30 on the base as described above. Although it is not shown in the drawings, the base may be peeled off from or left on the pressure-sensitive adhesive/adhesive layer 30, for example, as described above.

Further, forming an intermediate layer (aging) (5) is performed in an intermediate layer forming zone (aging zone) 230 to form an intermediate layer 22 by reacting the void-containing layer 20 with the pressure-sensitive adhesive/adhesive layer 30. In this process, the void-containing layer 20 turns into a void-containing layer 21 with improved strength, as described above. The forming an intermediate layer (aging) (5) may be performed, for example, by heating the void-containing layer 20 and the pressure-sensitive adhesive/adhesive layer 30 using hot air fans (heaters) 231 disposed above and below the base 10. The heating temperature, time, and the like are not particularly limited, and are, for example, as described above.

Then, after the forming an intermediate layer (aging) (5), a laminated film obtained by forming the void-containing layer 21 on the base 10 is wound up by a winding roller 251. Thereafter, another layer may be laminated on the laminated film, for example. Further, before the laminated film is wound up by the winding roller 251, another layer may be laminated

on the laminated film, for example.

Examples

Examples of the present invention will be described below. It is to be noted, however, that the present invention is by no means limited to the following examples.

In the following Reference Examples, Examples, and Comparative Examples, the number (relative usage amount) of each substance is the mass part (weight part) unless otherwise stated.

In the following Reference Examples, Examples, and Comparative Examples, the storage elastic modulus of the pressure-sensitive adhesive/adhesive layer at 23°C, the void fraction, the thickness of each layer, and the weight average molecular weight and the refractive index of the sol component of the pressure-sensitive adhesive/adhesive layer were measured by the following measuring methods.

(Measurement method of storage elastic modulus)

The storage elastic modulus of the pressure-sensitive adhesive/adhesive layer at 23°C was measured by the following methods using a viscoelasticity measurement device ARES (product of TA Instruments). That is, first, a sheet (layer) that is the same as the pressure-sensitive adhesive/adhesive layer in the following Reference Examples, Examples, and Comparative Examples except that the sheet has a thickness of 2 mm was formed. The sheet was stamped into the shapes corresponding to the parallel plates having a diameter of 25 mm, thereby obtaining measurement samples. The measurement sample was mounted on a chuck of the viscoelasticity measurement device ARES. Then, the temperature was increased from -70°C to 150°C at a heating rate of 5 °C/min while applying strain in the cycle of 1 Hz, and the storage elastic modulus at 23°C was measured.

In the pressure-sensitive adhesive/adhesive layer in the following Reference Examples, Examples, and Comparative Examples, it is presumed that, by heat-drying the coated pressure-sensitive adhesive, a polymer (acrylic polymer) was crosslinked by a crosslinking agent and a crosslinked structure was formed, however, the crosslinked structure was not examined.

(Measurement method of refractive index of void-containing layer prior to lamination of pressure-sensitive adhesive)

A base sample with a low refractive index layer was set in an ellipsometer (VASE, manufactured by J. A. Woollam Japan), and the refractive index was measured at a wavelength of 500 nm and at an incidence angle of 50° to 80°. The mean value of the thus-obtained measured values was set as the refractive index.

(Measurement method of refractive index of laminate after lamination of pressure-sensitive adhesive)

Using a prism coupler (manufactured by Metricon), a prism of the device was brought into close contact with a base side of a laminate obtained by laminating a pressure-sensitive adhesive on an ultra-low flexural layer, the total reflection critical angle was measured using a laser, and the refractive index was calculated from the critical angle.

(Measurement method of void fraction)

The void fraction was calculated according to the Lorentz-Lorenz's formula from the refractive index measured as described above.

(Measurement method of thickness)

The thicknesses of the pressure-sensitive adhesive layer at five points were measured using a dial gauge. The mean value of the thus-obtained measured values was set as the thickness of the pressure-sensitive adhesive layer. A thick part with different contrast present between the pressure-sensitive adhesive layer and the low-refractive-index layer in an SEM image was considered as an intermediate layer and the thicknesses of the intermediate layer at two points in the SEM image was read. The mean value of the thus-obtained values was set as the thickness of the intermediate layer.

(Measurement method of weight average molecular weight of sol content of pressure-sensitive adhesive/adhesive layer)

From the molecular weight distribution curve measured by gel permeation chromatography (GPC), the weight average molecular weight of the sol content and the proportion (weight percentage) of the low molecular weight component

having a molecular weight of 10,000 or less were calculated. Specifically, first, a measurement sample prepared in the same manner as the pressure-sensitive adhesive/adhesive layer in the following Reference Examples, Examples, and Comparative Examples (respective pressure-sensitive adhesive compositions were subjected to coating and then heat-drying) was prepared. 10 ml of tetrahydrofuran (THF) was added to 200 mg of the measurement sample, and the resultant was left to stand for 20 hours and filtered with a 0.45-μm membrane filter. Thereafter, the obtained filtrate was subjected to GPC measurement using the following measurement device under the following measurement conditions. Then, in the same manner as described above, the weight average molecular weight of the sol content and the proportion (weight percentage) of the low molecular weight component having a molecular weight of 10,000 or less were calculated from the molecular weight distribution curve.

GPC measurement device: product name "AQCUITY APC" (Waters Corporation)
Column: product name "G7000HxL+GMHxL+GMHxL" (manufactured by Tosoh Corporation)
Eluent: tetrahydrofuran (THF)
Flow rate: 0.8 mL/min
Detector: differential refractometer (RI)
Column temperature (measurement temperature): 40°C
Injection volume :100 μL
Standard: polystyrene

(Measurement method of refractive index)

The refractive index at the wavelength 500 nm was measured by the above-described method.

[Reference Example 1: production of coating solution for forming void-containing layer]

First, gelation of silicon compound (the following process (1)) and aging (the following process (2)) were performed to produce a gel (silicone porous material) having a porous structure. Thereafter, controlling a gel form (3), replacing a solvent (4), pulverizing a gel (5), modifying nanoparticles with fluoroalkyl groups (6), and mixing a fluoroalkyl group-modified nanoparticle dispersion liquid (7) described below were further performed to obtain a coating solution for forming a void-containing layer (gel pulverized product-containing solution). In the present Reference Example, the controlling a gel form (3) was performed as a different process from the process (1) as described below. The present invention, however, is not limited thereto, and, for example, the controlling a gel form (3) may be performed during the process (1)

(1) Gelation of silicon compound

9.5 kg of a silicon compound precursor MTMS was dissolved in 22 kg of DMSO. To the resultant mixture, 5 kg of 0.01 mol/L oxalic acid aqueous solution was added. The resultant mixture was stirred at room temperature for 120 minutes, whereby MTMS was hydrolyzed to generate tris(hydroxy)methylsilane.

3.8 kg of ammonia water with an ammonia concentration of 28% and 2 kg of pure water were added to 55 kg of DMSO. Thereafter, the above-described mixture having been subjected to the hydrolysis treatment was further added thereto. The resultant mixture was stirred at room temperature for 15 minutes. Thereafter, the mixture after stirring for 15 minutes was poured into a stainless container with a size of 30 cm in length × 30 cm in width × 5 cm in height and allowed to stand at room temperature to cause gelation of tris(hydroxy)methylsilane. Thus, a gelled silicon compound was obtained.

(2) Aging

The gelled silicon compound obtained by the above gelation treatment was subjected to an aging treatment by incubating it at 40°C for 20 hours. Thus, a cuboid gel mass was obtained.

(3) Controlling gel form

Water, which is a replacement solvent, was introduced on the gel synthesized in a stainless container with a size of 30 cm × 30 cm × 5 cm by the processes (1) and (2). Then, a cutting blade of a cutting tool was slowly inserted into the gel in the stainless container from the top to cut the gel into a cuboid with a size of 1.5 cm × 2 cm × 5 cm.

(4) Replacing solvent

Next, replacing a solvent was performed as described in (4-1) to (4-3) below.

(4-1) After the "controlling a gel form (3)", the gelled silicon compound was immersed in water 8 times the weight of the gelled silicon compound, and stirred slowly for 1 hour so that only water was convected. After 1 hour, the water was replaced with water of the same weight and stirred further for 3 hours. Thereafter, the water was replaced again, and then the water was heated for 3 hours while slowly stirring at 60°C.

(4-2) After (4-1), the water was replaced with isopropyl alcohol 4 times the weight of the gelled silicon compound, and heated for 6 hours while stirring at 60°C.

(4-3) After (4-2), the isopropyl alcohol was replaced with isobutyl alcohol of the same weight and heated for 6 hours at 60°C to replace the solvent contained in the gelled silicon compound with isobutyl alcohol. In the manner as described above, the gel for producing void-containing layer was produced.

(5) Pulverizing gel

The gel (gelled silicon compound) obtained after the replacing a solvent (4) was subjected to a total of two stages of pulverization including a first pulverization stage by continuous emulsification dispersion (Milder MDN304, manufactured by Pacific Machinery & Engineering Co., Ltd.) and a second pulverization stage by high pressure media-less pulverization (Star Burst HJP-25005, manufactured by Sugino Machine Limited). This pulverization treatment was performed in the following manner. First, 43.4 kg of the gel containing a gelled silicon compound having been subjected to solvent replacement was prepared. 26.2 kg of isobuyl alcohol was added to this gel, and the mixture was then weighed. Thereafter, the mixture was subjected to the first pulverization stage by closed-circuit pulverization for 20 minutes and the second pulverization stage at a pulverization pressure of 100 MPa. Thus, a dispersion liquid (gel pulverized product-containing liquid) of nanometer-sized particles (pulverized products of the gel) in isobutyl alcohol was obtained. Further, 224 g of methyl isobutyl ketone having 1.5 % WPBG-266 (product name, manufactured by Wako Pure Chemical Industries, Ltd.) was added to 3 kg of the gel pulverized product-containing liquid, and 67.2 g of methyl isobutyl ketone having 5 % bis(trimethoxylyl)ethane (manufactured by Tokyo Chemical Industry Co., Ltd.) was added thereto, and then 31.8 g of N,N-dimethylformamide was added and mixed, thereby obtaining a gel pulverized product-containing liquid.

(6) Modification reaction of nanoparticles by fluoroalkyl groups

0.27 g of isopropyl alcohol (IPA) was added to 0.06 g of 0.1 N (0.1 mol/L) HCl aqueous solution and then stirred, thereby obtaining a uniform solution. To this solution, 10 g of MIBK-ST (product name of Nissan Chemical Corporation: Si nanoparticle MIBK [methyl isobutyl ketone] dispersion liquid) was added, and then 0.7 g of trimethoxy(1H,1H,2H,2H-nonafluorohexyl)silane was added. The mixture thus obtained was heated and stirred at 60°C for 1 hour to perform the modification reaction of the Si nanoparticles, thereby obtaining a fluoroalkyl group-modified Si nanoparticle dispersion liquid (modified nanoparticle dispersion liquid).

(7) Mixing of fluoroalkyl group-modified nanoparticle dispersion liquid

To 3 kg of the gel pulverized product-containing liquid prepared by the processes (1) to (5), 60 g of the fluoroalkyl group-modified Si nanoparticle dispersion liquid (modified nanoparticle dispersion liquid) prepared by the process (6) was added, thereby obtaining a coating solution for forming void-containing layer.

[Reference 2: production of coating solution for forming void-containing layer]

A coating solution for forming void-containing layer was prepared in the same manner as in Reference Example 1 except that 94 mass% of MTMS and 6 mass% of vinyltrimethoxysilane (manufactured by Tokyo Chemical Industry Co., Ltd. (TCI)) were used instead of the total mass (100 mass%) of MTMS of Reference Example 1 (that is, 6 mass% of MTMS was replaced with vinyltrimethoxysilane).

[Reference 3: production of pressure-sensitive adhesive/adhesive coating solution and production of pressure-sensitive adhesive/adhesive layer]

A pressure-sensitive adhesive/adhesive coating solution was prepared as follows. In addition, the pressure-sensitive adhesive/adhesive coating solution was used to produce a pressure-sensitive adhesive/adhesive layer.

[Production of acrylic polymer]

90.7 parts of butyl acrylate, 6 parts of N-acryloyl morpholine, 3 parts of acrylic acid, 0.3 parts of 2-hydroxybutyl acrylate, and 0.1 parts by weight of 2,2'-azobisisobutyronitrile as a polymerization initiator were put into a four-neck flask equipped with a stirring blade, a thermometer, a nitrogen gas inlet tube, and a cooler together with 100 g of ethyl acetate. Subsequently, nitrogen gas was introduced while gently stirring the contents to perform nitrogen replacement. Thereafter, a polymerization reaction was performed for 8 hours while maintaining the solution temperature in the flask at about 55°C, thereby producing an acrylic polymer solution.

[Preparation of pressure-sensitive adhesive/adhesive coating solution]

To 100 parts of the solid content (all components except for solvent) of the acrylic polymer solution prepared as described above, 0.15 parts of an isocyanate-based crosslinking agent (product name: "Coronate L" manufactured by Nippon Polyurethane Industry Co., Ltd., an adduct of trimethylolpropane with trilene diisocyanate), 1.0 parts of benzoyl peroxide (product name: "NYPER BMT" manufactured by NOF CORPORATION), 0.075 parts of γ-glycidoxypropylmethoxysilane (product name: "KBM-403" manufactured by Shin-Etsu Chemical Co., Ltd.), and 8 parts of N-acryloylmorpholine were added, thereby preparing an acrylic pressure-sensitive adhesive solution. The benzoyl peroxide corresponds to an organic peroxide. N-acryloylmorpholine (ACMO) corresponds to "a monomer having one or two reactive double bonds per molecule". N-acryloylmorpholine is a monomer having one reactive double bond per molecule.

[Production of pressure-sensitive adhesive/adhesive layer]

The acrylic pressure-sensitive adhesive solution prepared as described above was coated onto one side of a silicone-treated polyethylene terephthalate (PET) film (manufactured by Mitsubishi Chemical Polyester Film Corporation, thickness: 38 μm) so that the thickness of the pressure-sensitive adhesive layer after being dried achieves 10 μm, and the coated acrylic pressure-sensitive adhesive composition was dried at 150°C for 3 minutes, thereby producing a pressure-sensitive adhesive/adhesive layer of the present Reference Example. The storage elastic modulus G' of the pressure-sensitive adhesive/adhesive layer at 23°C was $1.3 \times 10^5$.

[Reference 4: production of pressure-sensitive adhesive/adhesive coating solution and production of pressure-sensitive adhesive/adhesive layer]

A pressure-sensitive adhesive/adhesive coating solution was prepared as follows. In addition, the pressure-sensitive adhesive/adhesive coating solution was used to produce a pressure-sensitive adhesive/adhesive layer.

[Production of acrylic polymer]

The acrylic polymer solution the same as Reference Example 3 was prepared in the same manner as in Reference Example 3, "Production of Acrylic Polymer".

[Preparation of pressure-sensitive adhesive/adhesive coating solution]

To 100 parts of the solid content (all components except for solvent) of the acrylic polymer solution prepared as described above, 0.15 parts of an isocyanate-based crosslinking agent (product name: "Coronate L" manufactured by Nippon Polyurethane Industry Co., Ltd., an adduct of trimethylolpropane with trilene diisocyanate), 0.25 parts of benzoyl peroxide (product name: "NYPER BMT" manufactured by NOF CORPORATION), and 0.075 parts of γ-glycidoxypropylmethoxysilane (product name: "KBM-403" manufactured by Shin-Etsu Chemical Co., Ltd.) were added, thereby preparing an acrylic pressure-sensitive adhesive solution. That is, an acrylic pressure-sensitive adhesive solution was prepared in the same manner as in "Preparation of pressure-sensitive adhesive/adhesive coating solution" of Reference Example 3 except that no N-acryloylmorpholine was added and the quantity of benzoyl peroxide was changed.

[Production of Pressure-Sensitive Adhesive/Adhesive Layer]

The acrylic pressure-sensitive adhesive solution prepared as described above was coated onto one side of a silicone-treated polyethylene terephthalate (PET) film (manufactured by Mitsubishi Chemical Polyester Film Corporation, thickness: 38 μm) so that the thickness of the pressure-sensitive adhesive layer after being dried achieves 10 μm, and the coated acrylic pressure-sensitive adhesive composition was dried at 150°C for 3 minutes, thereby producing a pressure-sensitive adhesive/adhesive layer of the present Reference Example. That is, the pressure-sensitive adhesive/adhesive layer of the present Reference Example was produced in the same manner as "Production of pressure-sensitive adhesive/adhesive layer" of Reference Example 3 except that the acrylic pressure-sensitive adhesive solution of the present Reference Example (Reference Example 4) was used instead of the acrylic pressure-sensitive adhesive solution of the Reference Example 3. The storage elastic modulus G' of the pressure-sensitive adhesive/adhesive layer at 23°C was $1.3 \times 10^5$.

[Example 1]

The coating solution for forming void-containing layer prepared in Reference Example 1 was coated onto an acrylic base and then dried to form a high void fraction layer (void fraction: 59 vol%) having a thickness of about 850 nm. After UV iradiation (450 mJ/cm$^2$) was performed from the high void fraction layer side, the pressure-sensitive adhesive/adhesive layer having a thickness of 10 μm obtained in Reference Example 3 was attached to the high void fraction layer surface, and aging was performed at 50°C for 30 hours to produce a laminate of the present invention in which a pressure-sensitive adhesive/adhesive layer was directly laminated on one side of a void-containing layer.

Further, the produced laminate of the present invention was subjected to a heat/humidification durability test for 1000 hours in an oven at 60°C and at 90% RH. The amounts of the refractive index change before and after the heat/humidification durability test were measured and compared. The results are shown in Table 1.

[Example 2]

A laminate in which a pressure-sensitive adhesive/adhesive layer was directly laminated on one side of a void-containing layer was produced in the same manner as in Example 1 except that the pressure-sensitive adhesive/adhesive layer of Reference Example 4 was used instead of the pressure-sensitive adhesive/adhesive layer of Reference Example 3. Further, in the same manner as described in Example 1, the produced laminate was subjected to a heat/humidification durability test for 1000 hours in an oven at 60°C and 90% RH. The refractive index change amounts before and after the heat/humidification durability test were measured and compared. The results are shown in Table 1.

[Example 3]

A laminate in which a pressure-sensitive adhesive/adhesive layer was directly laminated on one side of a void-containing layer was produced in the same manner as in Example 1 except that the ratio of MTMS and vinyl trimethoxysilane in the coating solution for forming void-containing layer of Reference Example 2 was changed to 97 mass% of MTMS and 3 mass% of vinyl trimethoxysilane. Further, in the same manner as described in Example 1, the produced laminate was subjected to a heat/humidification durability test for 1000 hours in an oven at 60°C and 90% RH. The refractive index change amounts before and after the heat/humidification durability test were measured and compared. The results are shown in Table 1.

[Example 4]

A laminate in which a pressure-sensitive adhesive/adhesive layer was directly laminated on one side of a void-containing layer was produced in the same manner as in Example 1 except that the ratio of MTMS and vinyl trimethoxysilane in the coating solution for forming void-containing layer of Reference Example 2 was changed to 90 mass% of MTMS and 10 mass% of vinyl trimethoxysilane. Further, in the same manner as described in Example 1, the produced laminate was subjected to a heat/humidification durability test for 1000 hours in an oven at 60°C and 90% RH. The refractive index change amounts before and after the heat/humidification durability test were measured and compared. The results are shown in Table 1.

[Comparative Example 1]

A laminate in which a pressure-sensitive adhesive/adhesive layer was directly laminated on one side of a void-containing layer was produced in the same manner as in Example 2 except that the coating solution for forming void-containing layer of Reference Example 1 was used instead of the coating solution for forming void-containing layer of Reference Example 2. Further, in the same manner as described in Example 1, the produced laminate was subjected to a heat/humidification durability test for 1000 hours in an oven at 60°C and 90% RH. The refractive index change amounts before and after the heat/humidification durability test were measured and compared. The results are shown in Table 1.

[Comparative Example 2]

A laminate in which a pressure-sensitive adhesive/adhesive layer was directly laminated on one side of a void-containing layer was produced in the same manner as in Example 1 except that the ratio of MTMS and vinyl trimethoxysilane in the coating solution for forming void-containing layer was changed to 50 mass% of MTMS and 50 mass% of vinyl trimethoxysilane. Further, in the same manner as described in Example 1, the produced laminate was subjected to a heat/humidification durability test for 1000 hours in an oven at 60°C and 90% RH. The refractive index change amounts before and after the heat/humidification durability test were measured and compared. The results are shown in Table 1.

In Table 1 below, the "void retention rate before and after durability test" represents a numerical value obtained by dividing the void fraction (vol%) of the void-containing layer after the heat/humidification durability test by the void fraction (vol%) of the void-containing layer before the heat/humidification durability test. The "introduced double bond" represents the content (mass%) of vinyltrimethoxysilane relative to the sum of the total mass of MTMS and vinyltrimethoxysilane in the coating solution for forming void-containing layer.

[Table 1]

| * heat/humidification durability test condition: 60°C, 90%RH, 1000h | | | | | | |
|---|---|---|---|---|---|---|
| | Ex. 1 | Ex. 2 | Ex. 3 | Ex. 4 | Comp. Ex. 1 | Comp. Ex. 2 |
| Void fraction of void-containing layer before laminating pressure-sensitive adhesive/adhesive layer | 59 vol% | 59 vol% | 57 vol% | 57 vol% | 54 vol% | 52 vol% |
| Introduced double bond | Vinyl group 6 mass% | Vinyl group 6 mass% | Vinyl group 3 mass% | Vinyl group 10 mass% | - | Vinyl group 50 mass% |
| Mw of pressure-sensitive adhesive | $200 \times 10^4$ | $200 \times 10^4$ | $200 \times 10^4$ | $200 \times 10^4$ | $200 \times 10^4$ | $200 \times 10^4$ |
| Refractive index of void-containing layer before laminating pressure-sensitive adhesive/adhesive layer | 1.17 | 1.17 | 1.18 | 1.18 | 1.19 | 120 |
| Thickness of intermediate layer after durability test | 30 nm | 30 nm | 30 nm | 30 nm | 60 nm | 100 nm |
| Void fraction of void-containing layer after durability test | 52 vol% | 49 vol% | 49 vol% | 49 vol% | 36 vol% | 33 vol% |
| Void retention rate before and after durability test | 88% | 83% | 86% | 86% | 67% | 63% |
| Refractive index of laminate after durability test | 1.20 | 1.21 | 1.21 | 1.21 | 1.26 | 1.28 |

As shown in Table 1, before the heat/humidification durability test, the void fraction of the void-containing layer was as high as 52 vol% or more in all the laminates of Examples and Comparative Examples, and consequently, the refractive index of the void-containing layer was as low as 1.20 or less. After the heat/humidification durability test, the void retention rate of the void-containing layer was high in all the laminates of the Examples, and consequently, the refractive index of the void-containing layer was maintained as low as 1.21 or less. In contrast, in Comparative Example 1 in which vinyl trimethoxysilane was not contained in the coating solution for forming void-containing layer (that is, vinyl group as a $R^2$ group was not contained), and Comparative Example 2 in which the content of vinyl trimethoxysilane was too large, the void retention rate of the void-containing layer was low after the heat/humidification durability test, and consequently, the refractive index of void-containing layer was high.

Industrial Applicability

As described above, the present invention can provide a void-containing layer in which a pressure-sensitive adhesive or an adhesive is less liable to penetrate into voids, a laminate including the void-containing layer, a method

for producing the void-containing layer, and an optical member and an optical apparatus including the void-containing layer. The application of the present invention is not particularly limited. For example, the optical apparatus of the present invention is not particularly limited, and may be an image display device, an illumination device, or the like. Examples of the image display device include a liquid crystal display, an organic EL display, and a micro LED display. The illumination device may be, for example, an organic EL illumination, or the like. Further, the application of the void-containing layer and the laminate of the present invention is not limited to the optical member and the optical apparatus of the present invention, and can be used in a wide range of applications.

This application claims priority from Japanese Patent Application No. 2021-011080 filed on January 27, 2021. The entire subject matter of the Japanese Patent Application is incorporated herein by reference.

Reference Signs List

10: Base
20: Void-containing layer
20': Coating film (after drying)
20": Sol particle solution
21: Void-containing layer with improved strength
22: Intermediate layer
30: Pressure-sensitive adhesive/adhesive layer
101: Delivery roller
102: Coating roller
110: Oven zone
111: Hot air fan (heater)
120: Chemical treatment zone
121: Lamp (light irradiator) or hot air fan (heater)
130a: Pressure-sensitive adhesive/adhesive layer coating zone
130: Intermediate layer forming zone
131a: Pressure-sensitive adhesive/adhesive layer coater
131: Hot air fan (heater)
105: Winding roller
106: Roller
201: Delivery roller
202: Solution reservoir
203: Doctor (doctor knife)
204: Micro-gravure coater
210: Oven zone
211: Heater
220: Chemical treatment zone
221: Light irradiator or heater
230a: Pressure-sensitive adhesive/adhesive layer coating zone
230: Intermediate layer forming zone
231a: Pressure-sensitive adhesive/adhesive layer coater
231: Hot air fan (heater)
251: Winding roller

## Claims

**1.** A void-containing layer, comprising:

particles chemically bonding to each other, wherein
the void-containing layer has a void fraction of 35 vol% or more,
the particle is an inorganic-organic composite particle in which an organic group is bonded to an inorganic compound,
the organic group includes a $R^1$ group which is a linear or branched alkyl group and a $R^2$ group which is a group containing a carbon-carbon unsaturated bond, and

a molar ratio of the $R^2$ group relative to a sum of the $R^1$ group and the $R^2$ group is from 1 to 30 mol%.

2. The void-containing layer according to claim 1, wherein the $R^1$ group is a linear or branched alkyl group having 1 to 6 carbon atoms.

3. The void-containing layer according to claim 1 or 2, wherein the $R^2$ group is a group represented by the following chemical formula ($R^2$):

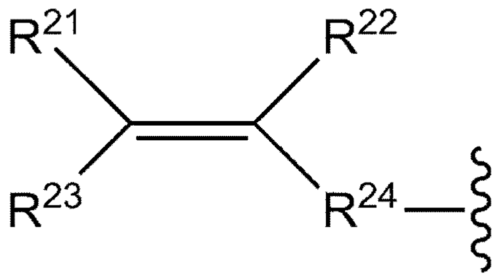

($R^2$)

wherein the chemical formulae ($R^2$),

$R^{21}$, $R^{22}$ and $R^{23}$ are each a hydrogen atom or a linear or branched alkyl group, and are the same or different from one another, and
$R^{24}$ is a linear or branched alkylene group, an oxycarbonyl group, an ether group, or a linear or branched alkylene oxycarbonyl group, or is not present.

4. The void-containing layer according to claim 3, wherein

in the chemical formulae ($R^2$),
$R^{21}$, $R^{22}$ and $R^{23}$ are each a hydrogen atom or a linear or branched alkyl group having 1 to 6 carbon atoms, and are the same or different from one another, and
$R^{24}$ is a linear or branched alkylene group having 1 to 6 carbon atoms, an oxycarbonyl group, an ether group, or a linear or branched alkylene oxycarbonyl group having 1 to 7 carbon atoms, or is not present.

5. The void-containing layer according to any one of claims 1 to 4, wherein the $R^2$ group is $CH_2$=CH-, $CH_2$=CH-$(CH_2)_{1-6}$-, $CH_2$=C($CH_3$)-COO-, $CH_2$=CH-O-, $CH_2$=C($CH_3$)-COO-$(CH_2)_{1-6}$-, or $CH_2$=C($CH_3$)-$CH_2$-.

6. The void-containing layer according to any one of claims 1 to 5, wherein the inorganic compound in the particle contains at least one skeletal atom selected from the group consisting of Si, Mg, Al, Ti, Zn and Zr.

7. The void-containing layer according to any one of claims 1 to 6, which is a silicone-porous material.

8. The void-containing layer according to any one of claims 1 to 7, wherein a refractive index is 1.25 or less.

9. A laminate comprising:

the void-containing layer according to any one of claims 1 to 8; and
a pressure-sensitive adhesive/adhesive layer directly laminated on one or both sides of the void-containing layer.

10. The laminate according to claim 9, comprising:

an intermediate layer between the void-containing layer and the pressure-sensitive adhesive/adhesive layer, wherein
the intermediate layer is a layer formed by uniting the void-containing layer and the pressure-sensitive adhesive/adhesive layer.

**11.** The laminate according to claim 9 or 10, wherein

the pressure-sensitive adhesive/adhesive layer is formed from a pressure-sensitive adhesive/adhesive coating solution containing a (meth)acrylic polymer, and
a weight average molecular weight of the (meth)acrylic polymer obtained by polymerizing 3 to 10 wt% of a heterocycle-containing acrylic monomer, 0.5 to 5 wt% of (meth)acrylic acid, 0.05 to 2 wt% of hydroxyalkyl (meth)acrylate, and 83 to 96.45 wt% of alkyl (meth)acrylate, as monomer components, is 1.5 million to 2.8 million.

**12.** The laminate according to claim 11, wherein
the (meth)acrylic polymer includes a (meth)acrylic polymer crosslinked with a crosslinking agent.

**13.** The laminate according to any one of claims 9 to 12, wherein
the pressure-sensitive adhesive/adhesive layer is formed by a method comprising:

preparing a pressure-sensitive adhesive/adhesive coating solution including a (meth)acrylic polymer, a monomer having one or two reactive double bonds per molecule, an isocyanate-based crosslinking agent, and an organic peroxide;
coating the pressure-sensitive adhesive/adhesive coating solution onto a base; and
heat-drying the base coated with the pressure-sensitive adhesive/adhesive coating solution.

**14.** The laminate according to claim 13, wherein
the monomer having one or two reactive double bonds is heterocycle-containing acrylate.

**15.** The laminate according to any one of claims 9 to 14, wherein
the pressure-sensitive adhesive/adhesive layer has a storage elastic modulus of $1.0 \times 10^5$ or more at 23 °C.

**16.** The laminate according to any one of claims 9 to 15, wherein
a refractive index is 1.25 or less after a heat/humidification durability test of maintaining a temperature at 60 °C and a relative humidity at 90% for 1000 hours.

**17.** A method for producing the void-containing layer according to any one of claims 1 to 8, comprising:

coating a dispersion liquid comprising the particles; and
drying the coated dispersion liquid.

**18.** An optical member comprising:
the void-containing layer according to any one of claims 1 to 8 or the laminate according to any one of claims 9 to 16.

**19.** An optical apparatus comprising:
the optical member according to claim 18.

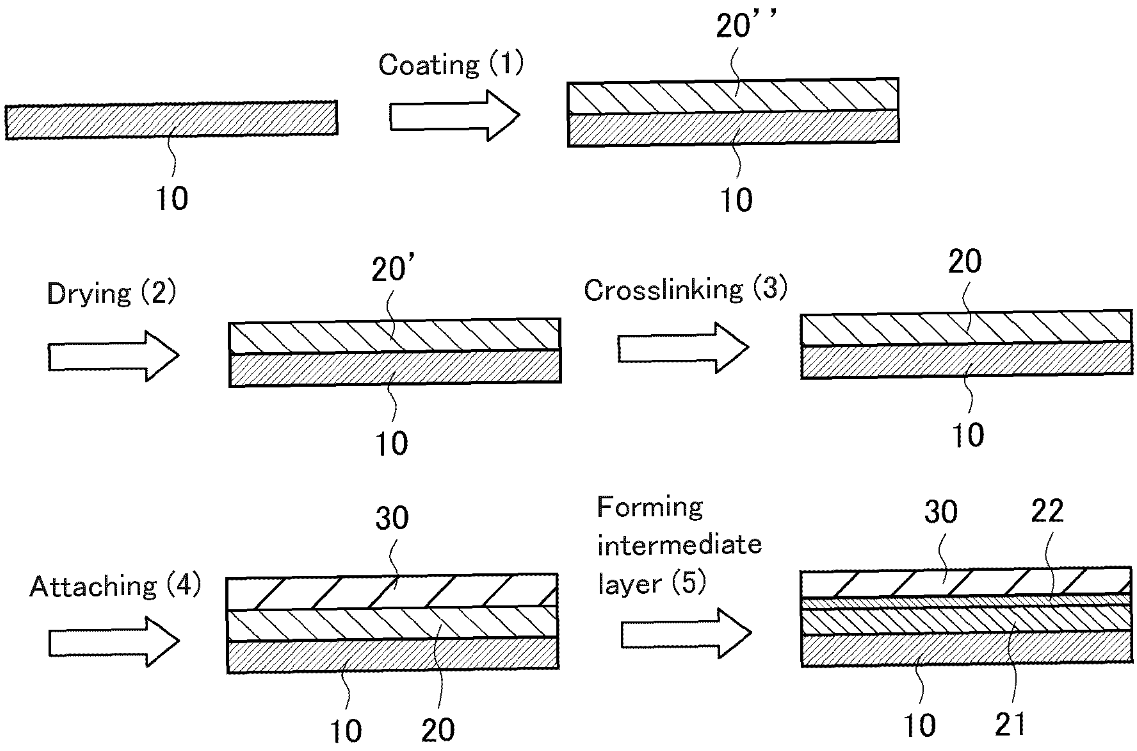
Coating (1)
20''
10
10
Drying (2)
20'
10
Crosslinking (3)
20
10
Attaching (4)
30
10
20
Forming intermediate layer (5)
30
22
10
21

FIG. 1

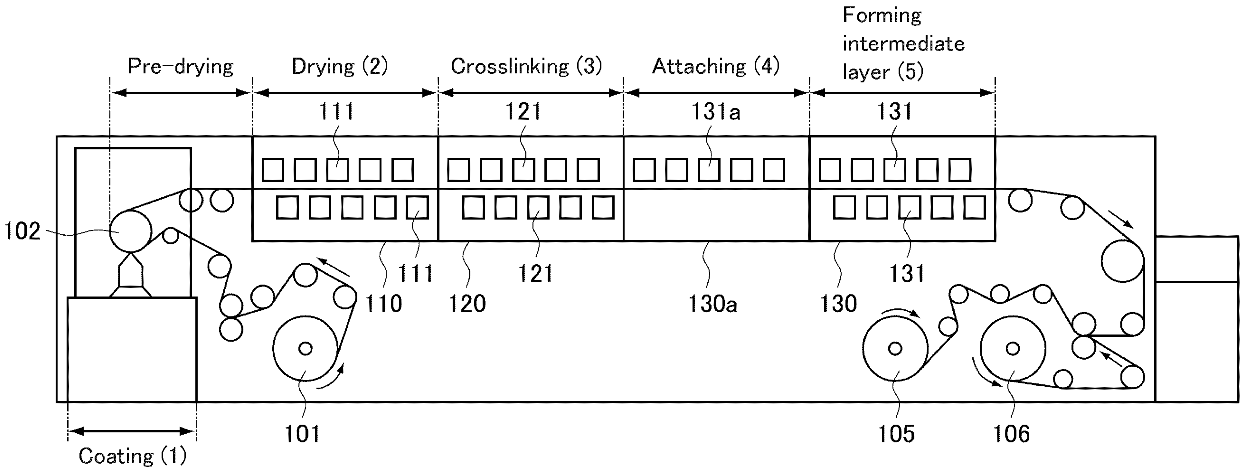
Pre-drying
Drying (2)
Crosslinking (3)
Attaching (4)
Forming intermediate layer (5)
111
121
131a
131
102
111
121
131
110
120
130a
130
101
105
106
Coating (1)

FIG. 2

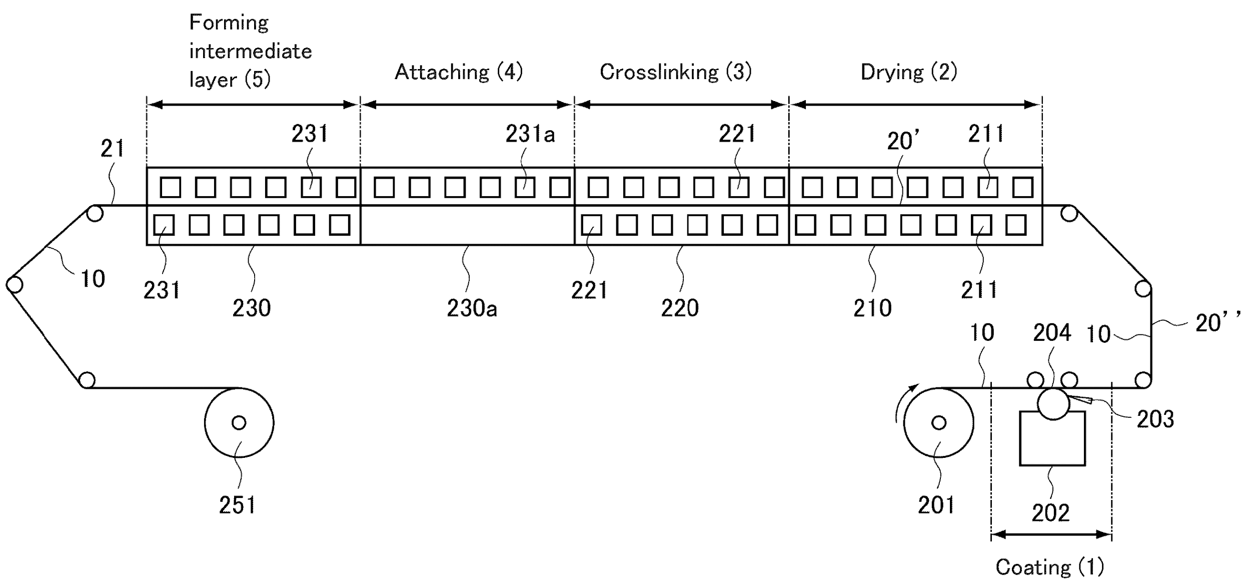
Forming intermediate layer (5)
Attaching (4)
Crosslinking (3)
Drying (2)
Coating (1)
21
231
231a
221
20'
211
10
231
230
230a
221
220
210
211
10
204
10
20''
203
251
201
202

FIG. 3

# INTERNATIONAL SEARCH REPORT

International application No.
**PCT/JP2022/002704**

## A. CLASSIFICATION OF SUBJECT MATTER

***G02B 1/111***(2015.01)i; ***B32B 3/26***(2006.01)i; ***B32B 27/30***(2006.01)i; ***C09J 4/02***(2006.01)i; ***C09J 7/26***(2018.01)i; ***C09J 7/38***(2018.01)i; ***C09J 133/06***(2006.01)i; ***C09J 133/14***(2006.01)i; ***C09J 175/04***(2006.01)i
FI: G02B1/111; C09J7/38; C09J7/26; C09J133/06; C09J133/14; C09J4/02; C09J175/04; B32B3/26 Z; B32B27/30 A

According to International Patent Classification (IPC) or to both national classification and IPC

## B. FIELDS SEARCHED

Minimum documentation searched (classification system followed by classification symbols)

G02B1/111; B32B3/26; B32B27/30; C09J4/02; C09J7/26; C09J7/38; C09J133/06; C09J133/14; C09J175/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2010-084017 A (SEKISUI CHEM CO LTD) 15 April 2010 (2010-04-15) claims, paragraphs [0002], [0020]-[0034], [0096]-[0112] | 1-19 |
| Y | WO 2019/065999 A1 (NITTO DENKO CORP) 04 April 2019 (2019-04-04) claims, paragraphs [0005]-[0007], [0030], [0208]-[0291]. fig. 1 | 1-19 |
| Y | JP 2017-047677 A (NITTO DENKO CORP) 09 March 2017 (2017-03-09) claims, paragraphs [0100]-[0101], fig. 1, 4A-4B | 1-7, 9-15, 17-19 |
| Y | JP 2014-046518 A (ASAHI KASEI CHEMICALS CORP) 17 March 2014 (2014-03-17) claims, paragraphs [0144]-[0148] | 1-7, 9-15, 17-19 |
| Y | WO 2012/115057 A1 (ASAHI KASEI CHEMICALS CORP) 30 August 2012 (2012-08-30) claims, paragraphs [0143]-[0147] | 1-7, 9-15, 17-19 |
| Y | JP 2016-085240 A (ASAHI KASEI CORP) 19 May 2016 (2016-05-19) paragraphs [0049]-[0054], [0139]-[0140] | 1-19 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/002704**

**C. DOCUMENTS CONSIDERED TO BE RELEVANT**

| Category* | Citation of document, with indication, where appropriate, of the relevant passages | Relevant to claim No. |
|---|---|---|
| A | JP 2020-152873 A (KANEKA CORP) 24 September 2020 (2020-09-24) claims, paragraphs [0017]-[0062] | 1-19 |
| A | JP 2008-256747 A (FUJIFILM CORP) 23 October 2008 (2008-10-23) entire text, all drawings | 1-19 |

Form PCT/ISA/210 (second sheet) (January 2015)

**INTERNATIONAL SEARCH REPORT**
**Information on patent family members**

International application No.
**PCT/JP2022/002704**

| Patent document cited in search report | Publication date (day/month/year) | Patent family member(s) | Publication date (day/month/year) |
|---|---|---|---|
| JP 2010-084017 A | 15 April 2010 | (Family: none) | |
| WO 2019/065999 A1 | 04 April 2019 | US 2020/0223175 A1<br>claims, paragraphs [0007], [0008], [0037], [0225]-[0345], fig. 1<br>EP 3686006 A1<br>CN 111183031 A<br>KR 10-2020-0062221 A<br>TW 201922477 A<br>JP 2019-64259 A | |
| JP 2017-047677 A | 09 March 2017 | US 2018/0224580 A1<br>claims, paragraphs [0113]-[0114], fig. 1, 4A-4B<br>WO 2017/022690 A1<br>EP 3321082 A1<br>TW 201711847 A<br>KR 10-2018-0039582 A<br>CN 111093971 A | |
| JP 2014-046518 A | 17 March 2014 | (Family: none) | |
| WO 2012/115057 A1 | 30 August 2012 | US 2013/0337161 A1<br>claims, paragraphs [0234]-[0239]<br>EP 2679645 A1<br>CN 103314063 A<br>KR 10-2013-0119476 A<br>TW 201240822 A | |
| JP 2016-085240 A | 19 May 2016 | (Family: none) | |
| JP 2020-152873 A | 24 September 2020 | (Family: none) | |
| JP 2008-256747 A | 23 October 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012156082 A
- JP H101998062626 A
- JP 2014046518 A
- JP 2021011080 A